(19)

(11) **EP 3 068 669 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **14789793.8**

(22) Anmeldetag: **22.10.2014**

(51) Int Cl.:
***B60T 17/22*** *(2006.01)*

(86) Internationale Anmeldenummer:
**PCT/EP2014/002848**

(87) Internationale Veröffentlichungsnummer:
**WO 2015/070945 (21.05.2015 Gazette 2015/20)**

(54) **VERFAHREN UND SYSTEM ZUM ERKENNEN VON BETRIEBSZUSTÄNDEN EINES FAHRZEUGES UND FAHRZEUG MIT DERARTIGEM SYSTEM**

METHOD AND SYSTEM FOR IDENTIFYING OPERATING STATES OF A VEHICLE, AND A VEHICLE WHICH COMPRISES SUCH A SYSTEM

PROCÉDÉ ET SYSTÈME DE DÉTECTION D'ÉTATS DE FONCTIONNEMENT D'UN VÉHICULE ET VÉHICULE ÉQUIPÉ D'UN SYSTÈME DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013019240**

(43) Veröffentlichungstag der Anmeldung:
**21.09.2016 Patentblatt 2016/38**

(73) Patentinhaber: **WABCO GmbH**
**30453 Hannover (DE)**

(72) Erfinder:
- **BARTH, Christoph**
  **30451 Hannover (DE)**
- **MUNKO, Tobias**
  **30459 Hannover (DE)**
- **THA, Ingo**
  **30449 Hannover (DE)**

(74) Vertreter: **Lauerwald, Jörg**
**Wabco GmbH**
**Am Lindener Hafen 21**
**30453 Hannover (DE)**

(56) Entgegenhaltungen:

| | |
|---|---|
| **WO-A2-2008/085184** | **DE-A1- 19 744 066** |
| **DE-A1- 19 955 798** | **GB-A- 2 425 760** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 068 669 B1

**Beschreibung**

Die Erfindung betrifft ein Verfahren zum Erkennen von Betriebszuständen eines Fahrzeuges, insbesondere einem Zustand des Fahrzeuges mit oder ohne Anhänger, gemäß dem unabhängigen Anspruch 1, ein elektro-pneumatisches System gemäß dem weiteren unabhängigen Anspruch 14 und ein Fahrzeug gemäß Anspruch 15.

Das Erkennen eines Betriebszustandes eines Fahrzeuges, insbesondere ob an einem (Nutz-)Fahrzeug z. B. an einem LKW ein Anhänger angekoppelt ist oder nicht, wird typischerweise im Stand der Technik mittels einer CAN-Verbindung zwischen Fahrzeug und Anhänger bzw. über ein entsprechendes CAN-Signal ausgeführt oder abgefragt. Es existieren jedoch auch Fahrzeuge und Anhänger, die nicht über eine derartige CAN-Verbindung verfügen. Ebenso kann es sein, dass die CAN-Verbindung defekt ist oder jeweils nur das Fahrzeug oder der Anhänger eine CAN-Verbindung aufweist, so dass eine Statusabfrage des Fahrzeuges über die CAN-Verbindung nicht möglich ist.

Wünschenswert wäre es deshalb, neben oder anstatt der Statusabfrage über eine CAN-Verbindung, ein Verfahren und eine Vorrichtung bereitzustellen, die es erlauben den Betriebszustand eines Fahrzeuges, nämlich den Zustand des Fahrzeuges bei dem ein Anhänger (Anhängerbetrieb) angekoppelt, oder bei dem kein Anhänger (Solobetrieb) angekoppelt ist, festzustellen. Aus dem Stand der Technik sind hierfür eine Vielzahl von Verfahren bekannt.

So ist beispielsweise in dem Dokument DE 42 00 302 C2 ein Verfahren zur Überprüfung eines Fahrzeugs/Systems mittels einer Kontrolleinheit beschrieben. Die Kontrolleinheit umfasst eine Druckleitung, welche über eine Kopplungsstelle mit einer Druckleitung eines weiteren Systems z. B. eines Anhängers verbunden ist. Mittels der Auswertung des Druckes in der Druckleitung wird ein Zustand des Systems bestimmt.

Weiterhin ist aus dem Dokument DE 197 44 066 B4 bekannt, für die Erkennung eines Anhängers bei einem Fahrzeug ein Verfahren zu verwenden, bei welchem der zum Anhänger gehende Steuerdruck erfasst wird, derart, dass eine druckaufbaukennzeichnende Größe aus einem Drucksignal ermittelt und ausgewertet wird.

Das Dokument DE 199 55 798 A1 beschreibt eine Anhängererkennung für ein Gespann aus Zugmaschine mit einem hydraulischen Bremssystem und Anhänger mit einem pneumatischen Bremssystem, wobei der Anhänger an die Zugmaschine angekoppelt wird. Für die Erkennung, ob an dem Zugfahrzeug tatsächlich ein Anhänger angekoppelt ist, wird das Zeitverhalten des Druckes in einem gegenüber der Atmosphäre abgeschlossenem pneumatischen Raum bestimmt.

Auch die Patentanmeldung DE 33 02 236 A1 beschreibt ein Prüfgerät für eine Druckänderung in einer Druckluftanlage, insbesondere in einem Mehrkreisbremssystem. Weiterhin ist aus dem Dokument DE 40 39 957 A1 ein Verfahren zum Testen eines Bremssystems eines Fahrzeuges im statischen Betrieb bekannt.

Die aus dem Stand der Technik bekannten Verfahren und Vorrichtungen haben den Nachteil, dass sie nur unter bestimmten Bedingungen oder Voraussetzungen eingesetzt werden können, nämlich dann wenn z. B. ein spezielles Bremssystem oder ein besonderes Ventil für den Einsatz zur Verfügung stehen.

Hier setzt die Erfindung an, deren Aufgabe es ist ein verbessertes Verfahren und eine verbesserte Vorrichtung zum Erkennen eines Betriebszustandes eines Fahrzeuges, insbesondere eines Zustandes des Fahrzeuges mit oder ohne angekoppelten Anhänger, zur Verfügung zu stellen, ohne das hierbei ein CAN-Signal verwendet wird. Insbesondere ist es die Aufgabe der Erfindung ein Verfahren bereitzustellen, das systemunabhängig oder fahrzeugunabhängig eingesetzt werden kann.

Die vorstehende Aufgabe wird erfindungsgemäß durch das Verfahren nach Anspruch 1, das elektro-pneumatische System nach Anspruch 14 sowie das Fahrzeug nach Anspruch 15 gelöst. Die Unteransprüche sind Gegenstand bevorzugter Ausgestaltungsformen der Erfindung und präzisieren sowohl das Verfahren als auch das elektro-pneumatische System und Fahrzeug.

Die Erfindung umfasst ein Verfahren zum Erkennen von einem Betriebszustand eines Fahrzeuges, wobei der Betriebszustand ausgewählt ist aus mindestens einem ersten oder zweiten Betriebszustand, insbesondere aus einem Zustand des Fahrzeuges mit oder ohne Anhänger, und das Fahrzeug aufweisend ein pneumatisches Bremssystem und eine pneumatische Steuerverbindung, die ausgebildet ist, um das pneumatische Bremssystem mit einem weiteren pneumatischem Bremssystem eines Anhängers zu verbinden, dadurch gekennzeichnet, dass das Verfahren die folgenden Schritte umfasst:

- Beaufschlagen der Steuerverbindung mit Druck bis ein Startdruck in der Steuerverbindung eingestellt ist;
- Öffnen der Steuerverbindung, so dass ein Druckausgleich zwischen Steuerverbindung und einer Umgebung erfolgt;
- Erfassen eines zeitlichen Druckverlaufes während des Druckausgleichs;
- Vergleichen des zeitlichen Druckverlaufes mit einem Referenzdruckverlauf;
- Ermitteln eines Auswerteergebnisses basierend auf dem Vergleichen von zeitlichen Druckverlauf und Referenzdruckverlauf; und
- Zuordnen des Auswerteergebnisses zu dem ersten oder zweiten Betriebszustand des Fahrzeuges.

Weiterhin umfasst die Erfindung ein elektro-pneumatisches System zum Erkennen von einem Betriebszustand eines Fahrzeuges, insbesondere ausgebildet das erfindungsgemäße Verfahren auszuführen, aufweisend:

- ein pneumatisches Bremsdrucksystem,
- eine Steuerverbindung, die ausgebildet ist, das pneumatische Bremsdrucksystem mit einem weiteren pneumatischen Bremsdrucksystem eines Anhängers zu verbinden,
- einen Druckspeicher zur Druckbeaufschlagung an die Steuerverbindung,
- ein Entlüftungsventil zum Öffnen der Steuerverbindung zur Umgebung,
- einen Drucksensor zum Erfassen eines zeitlichen Druckverlaufes in der Steuerverbindung,
  dadurch gekennzeichnet, dass das System
- eine Steuereinheit aufweist, die ausgebildet ist, aus dem zeitlichen Druckverlauf und einem Referenzdruckverlauf ein Auswerteergebnis zu ermitteln und das Auswerteergebnis einem Betriebszustand des Fahrzeuges zu zuordnen, wobei der Betriebszustand ausgewählt ist aus mindestens einem ersten und einem zweiten Betriebszustand, insbesondere aus einem Zustand des Fahrzeuges mit oder ohne Anhänger.

Darüber hinaus umfasst die Erfindung ein Fahrzeug enthaltend ein erfindungsgemäßes elektro-pneumatisches System zum Erkennen von einem Betriebszustand eines Fahrzeuges, welches insbesondere dazu ausgebildet ist, das erfindungsgemäße Verfahren auszuführen.

Im Folgenden wird das Konzept der Erfindung beispielhaft - ohne dabei einschränkend zu sein - beschrieben.

Mit dem vorgeschlagenen Verfahren und dem elektro-pneumatischen System ist es möglich über ein Erfassens eines zeitlichen Druckverlaufes beim Be- und Entlüften einer Steuerverbindung eines Fahrzeuges, Rückschlüsse auf den Betriebszustand des Fahrzeuges zu schließen, insbesondere den Betriebszustand zu erkennen und auszugeben. Das erfindungsgemäße Verfahren ist für alle Fahrzeugtypen mit einem pneumatischen Bremssystem vorgesehen, insbesondere für Nutzfahrzeuge wie Lastkraftwagen (LKWs) und Sattelzugmaschinen (SZM). Das Erfassen des zeitlichen Druckverlaufes nach einem Druckbeaufschlagen und Öffnen der Steuerverbindung ist ein geeignetes Kriterium für die Bestimmung des Betriebszustandes des Fahrzeuges, insbesondere des Betriebszustandes des Fahrzeuges mit oder ohne Anhänger. Bei der Steuerverbindung handelt es sich beispielsweise um eine pneumatische Steuerleitung eines pneumatischen Systems des Fahrzeuges, die an ein weiteres pneumatisches System, beispielsweise eines Anhängers, ankoppelbar ist. Der erfasste zeitliche Druckverlauf oder das Druckverhalten beschreibt die zeitliche Änderung des Druckes in der Steuerverbindung. Zunächst wird erfindungsgemäß der Druck in der Steuerverbindung manipuliert, derart, dass in der Steuerverbindung ein anderer Druck (Startdruck) herrscht als in der Umgebung. Nach dem Öffnen der Steuerverbindung zur Umgebung, stellt sich - nach einer gewissen Zeit - ein Druckausgleich zwischen der Umgebung und der geöffneten Steuerverbindung ein, wobei die zeitliche Änderung des Druckes, nämlich der zeitliche Druckverlauf in der Steuerleitung, erfasst wird. Aus einem Vergleich des erfassten zeitlichen Druckverlaufes mit einem zeitlichen Referenzdruckverlauf wird ein Auswerteergebnis ermittelt, wobei das Auswerteergebnis insbesondere ein Maß für eine Abweichung des erfassten Druckverlaufes vom Referenzdruckverlauf ist. Nach der Ermittlung des Auswerteergebnisses wird dieses anschließend einem Betriebszustand des Fahrzeuges zugeordnet.

Mittels des Vergleiches des erfassten zeitlichen Druckverlaufes mit dem Referenzdruckverlauf wird entschieden, welcher Betriebszustand des Fahrzeuges vorliegt, insbesondere ob ein Anhänger- oder ein Solobetrieb des Fahrzeuges vorliegt. Hierfür ist es in besonderer Weise notwendig einen geeigneten Referenzdruckverlauf vorzugeben. Nach dem Konzept der Erfindung kann der Referenzdruckverlauf hierbei entweder den Betriebszustand des Fahrzeuges mit oder den Betriebszustand ohne Anhänger, also Anhänger- oder Solobetrieb des Fahrzeuges repräsentieren.

Im Rahmen einer bevorzugten Ausführungsform wird ein zeitlicher Druckverlauf als ein Referenzdruckverlauf für einen vorher bestimmten Betriebszustand des Fahrzeuges (also unter kontrollierten Bedingungen), nämlich mit oder ohne Anhänger erfasst, gespeichert und im System hinterlegt. Der so erfasste Druckverlauf, der dann diesen bestimmten Betriebszustand des Fahrzeuges repräsentiert, dient beim Vergleich mit anderen - während des Verfahren erfassten - Druckverläufen als Referenzdruckverlauf und erlaubt Rückschlüsse über den Betriebszustand des Fahrzeuges.

Im Rahmen einer anderen möglichen, bevorzugten Ausführungsform der Erfindung ist vorgesehen, dass als Referenzdruckverlauf ein theoretisches Modell dient. Bevorzugt soll hierbei das Modell den Referenzverlauf für den Solobetrieb des Fahrzeuges abbilden. Wird bei Vergleichen dann eine Abweichung vom Referenzverlauf festgestellt, so wird auf einen Anhängerbetrieb geschlossen. Im Vorfeld zu der vorliegenden Erfindung wurden von der Anmelderin für die Bestimmung eines theoretischen Models für einen geeigneten Referenzdruckverlauf verschiedene Druck-Zeit Messungen bei einem Fahrzeug mit einem vorgegebenen Volumen durchgeführt. Ohne Einschränkung der Erfindung wurde hier beispielhaft ein Volumen für ein Fahrzeug im Solobetrieb von ca. V = 0,45 l angenommen (z. B. für einen LKW vom Typ Actros 2553, 6x2) oder eine Volumen von ca. V = 0,4 l für eine Sattelzugmaschine (SZM) als Summe aus V = 0,2 l für das Solofahrzeug und V = 0,2 l für die Wendelflexleitung. Es hat sich gezeigt, dass der Druckverlauf für den Solobetrieb bei diesem Volumen (s. o.) im Wesentlichen durch die folgende Formel/Funktion:

$$t_{Ref}(p) = 22\frac{ms}{bar} * p + 90ms \quad (1.1)$$

beschreiben lässt. Der Vergleich von Simulation und Messung zeigen gute Übereinstimmung. Das bei dieser Messung verwendetet (konstante) Volumen dient das Standardvolumen. Die Steigung dieser (linearen) Funktion ist bei konstantem Volumen naturgemäß konstant. Für andere Volumen ergeben sich jedoch andere Steigungen, da diese von Änderungen des Volumens abhängt. Für ein(en) einzelne(s)(n) Fahrzeug/Fahrzeugtyp ist das Volumen jedoch stets konstant. Änderungen treten nur bei unterschiedlichen Fahrzeugen oder Fahrzeugtypen auf. Weicht das Volumen vom obigen Standardvolumen ab, so kann gemäß der folgenden Formel die Steigung korrigiert oder angepasst werden:

$$m_{Kor}(V_{Abw}) = 52{,}7\frac{ms}{bar * l} * V_{Abw} + 22\frac{ms}{bar}. \quad (1.2)$$

Volumenänderungen treten im laufenden Betrieb eines Fahrzeuges jedoch nicht auf.

Mit der Bestimmung oder Vorgabe eines geeigneten Referenzdruckverlaufes, sei es nun für den Betriebsstatus mit oder ohne Anhänger, kann nun ein Vergleich mit dem erfassen Druckverlauf vorgenommen werden. Stimmen beim Vergleich der erfasste zeitliche Druckverlauf und der Referenzdruckverlauf im Wesentlichen überein, d. h. sie sind bis auf geringe Unterschiede identisch, so liegt der vom Referenzdruckverlauf repräsentierte Betriebszustand des Fahrzeuges vor. Liegt hingegen keine Übereinstimmung vor, d. h. der erfasste und der Referenzdruckverlauf unterscheiden sich deutlich, so liegt ein anderer Betriebszustand des Fahrzeuges als der des Referenzdruckverlaufs vor.

Nach der Ermittlung des Betriebszustandes des Fahrzeuges wird in einer weiteren möglichen Ausgestaltungsform der Erfindung, der ermittelte Betriebszustand an den Fahrer des Fahrzeuges ausgegeben, beispielsweise über eine Anzeigevorrichtung, z. B. eine Lampe oder einen Bildschirm, so dass der Fahrer über den Betriebszustand des Fahrzeuges informiert wird.

Diese und andere bevorzugte Ausgestaltungsformen der Erfindung sind Gegenstand der Unteransprüche und präzisieren sowohl das Verfahren als auch das elektro-pneumatische System und Fahrzeug. Insbesondere sind bevorzugte Weiterbildungen Gegenstand der Unteransprüche und geben im Einzelnen vorteilhafte Möglichkeiten an, wie das/die oben erläuterte Verfahren/Vorrichtung im Rahmen der Aufgabenstellung sowie hinsichtlich weiterer Vorteile zu realisieren bzw. auszugestalten ist.

Insbesondere ist vorgesehen, dass das Öffnen der Steuerverbindung mittels eines Entlüftungsventils ausgeführt wird. Hierbei handelt es sich um ein Entlüftungsventil, dass die Steuerverbindung steuerbar zur Umgebung öffnet. Beispielsweise ist hier ein automatisch ansteuerbares Be- und Entlüftungsventil in Form eines magnetischen oder elektromagnetischen Ventils vorgesehen.

Bei einer zweckmäßigen Ausgestaltung kann es vorgesehen sein, dass der zeitliche Druckverlauf ein Druckabfall in der Steuerleitung ist. Bei dieser Ausgestaltung herrscht in der Steuerleitung ein höherer Druck oder ein höheres Druckniveau als in der Umgebung. Nach dem Öffnen der Steuerleitung zur Umgebung, fällt der Druck in der Steuerleitung vom Startdruck ab, bis sich ein Druckausgleich zwischen der Umgebung und Steuerleitung eingestellt hat. Eine bevorzugte Weiterbildung sieht vor, dass beim Erfassen des zeitlichen Druckverlaufes zusätzlich die folgenden Schritte ausgeführt werden, nämlich: ein Starten eines Zeitmessers beim Öffnen der Steuerverbindung; ein Beenden des Zeitmessers, wenn in der Steuerverbindung ein Druckgrenzwert erreicht wird; und ein Ermitteln einer Entlüftungszeit der Steuerverbindung. Hierbei ist es in vorteilhafter Weise vorgesehen, dass gleichzeitig zum Erfassen des Druckverlaufes in der Steuerverbindung eine Zeitdauer mittels eines Zeitmessers oder Timers erfasst wird. Die Messung der Zeitdauer beginnt mit dem Öffnen der Steuerverbindung zur Umgebung und endet mit dem Erreichen eines Druckgrenzwertes in der Steuerverbindung. Hierbei kann es insbesondere vorgesehen sein, dass eine interne oder externe Uhr als Zeitmesser, beispielweise eine Quarzuhr, verwendet wird. In einer anderen Ausgestaltung wird ein softwarebasierter Zeitmesser verwendet. Die Zeit kann entweder absolut oder relativ gemessen werden. Für das Beenden des Zeitmessers ist es vorgesehen, dass ein Druckgrenzwert in der Steuerverbindung erreicht wird. Hierbei kann es sich z. B. um Atmosphärendruck handeln. Ohne Einschränkung können auch andere Druckgrenzwerte vorgesehen sein, die vom Atmosphärendruck abweichen, wie z. B. ein Druckgrenzwert von 0,1 bar, wobei der Druckgrenzwert bevorzugt über dem Atmosphärendruck liegt.

Bei einer vorteilhaften Ausgestaltung kann es vorgesehen sein, dass dem zeitlichen Druckverlauf die Entlüftungszeit der Steuerverbindung und dem Referenzdruckverlauf eine Referenzentlüftungszeit zugeordnet wird. Gemäß dieser Ausgestaltungsform werden den jeweiligen Druckverläufen Entlüftungszeiten zugeordnet, so dass es anschließend möglich ist, nicht nur die einzelnen Druckverläufe zu verglichen, sondern zusätzlich oder anstatt die jeweilig zugeordneten Entlüftungszeiten. Die Entlüftungszeit ist die Zeit, in welcher der Druck vom Startdruck beim Öffnen der Steuerverbindung zur Umgebung auf Umgebungsdruck fällt. Die Referenzentlüftungszeit repräsentiert wiederum einen vorher festgelegten/bestimmten Betriebszustand des Fahrzeuges, z. B. die Entlüftungszeit der Steuerleitung eines Fahrzeuges mit oder ohne Anhänger. Nach dem Zuordnen des zeitlichen Druckverlaufes zu der Entlüftungszeit, wird dann die Entlüftungszeit mit der Referenzentlüftungszeiten verglichen, so dass aus diesem Vergleich ein Erkennen des Betriebszustandes des Fahrzeuges möglich ist.

Eine bevorzugte Weiterbildung sieht vor, dass beim Vergleichen der Entlüftungszeit und der Referenzentlüftungszeit eine Differenz gebildet wird. Hierbei ist es in besonderer Weise vorgesehen, dass der erste Betriebszustand, den Betriebszustand des Fahrzeuges mit Anhänger und der zweite Betriebszustand, der Betriebszustand des Fahrzeuges ohne Anhänger repräsentiert. Darüber hinaus repräsentiert die Referenzentlüftungszeit einen der beiden Betriebszustände des Fahrzeuges, nämlich mit oder ohne Anhänger. Bei einer Differenzenbildung aus Entlüftungszeit und Referenzentlüftungszeit wird dann einerseits bei einem Differenzwert von $\Delta t > +200$ ms der jeweils andere Betriebszustand als derjenige, welcher von der Referenzentlüftungszeit repräsentiert wird, dem Fahrzeug zugeordnet. Andererseits wird bei einem Differenzwert von $\Delta t < |\pm 50|$ ms, der gleiche Betriebszustand, nämlich der Betriebszustand der Referenzentlüftungszeit, zugeordnet.

Eine Weiterbildung kann vorsehen, dass das Verfahren nach dem Erfassen des zeitlichen Druckverlaufes zusätzlich die folgenden Schritte aufweist, nämlich ein Ermitteln einer zeitlichen Ableitung des zeitlichen Druckverlaufes; und ein Vergleichen der zeitlichen Ableitung mit einer zeitlichen Ableitung des Referenzdruckverlaufes. Bei dieser Ausgestaltung wird die zeitliche Ableitung des zeitlichen Druckverlaufes mit der zeitlichen Ableitung des Referenzdruckverlaufes verglichen. Hierdurch ist eine zusätzliche Überprüfung/eine zusätzliche Erkennung des Betriebszustandes des Fahrzeuges möglich. Ein Vergleich der zeitlichen Änderung (Ableitung) des zeitlichen Druckverlaufes kann ergänzend, d. h. zusätzlich oder anstatt des Vergleiches der Druckverläufe oder Entlüftungszeiten erfolgen. In einigen Fällen ist es vorteilhaft, die zeitlichen Ableitungen zu vergleichen, da diese teilweise sensibler auf Unterschiede oder Abweichungen zu dem Referenzdruckverlauf reagieren. Der ergänzende Vergleich der Änderung (Ableitung) des zeitlichen Druckverlaufes kann auch zur Überprüfung oder Verifizierung des Vergleiches des zeitlichen Druckverlaufes herangezogen werden. Bevorzugt sieht eine weitere Ausgestaltung vor, dass der Startdruck in der Steuerverbindung bevorzugt einen Wert von 6 bis 5 bar aufweist. Darüber hinaus kann es auch vorteilhaft sein, für das Beaufschlagen der Steuerverbindung kleinere Drücke, z. B. 3 bis 4 bar oder kleiner 3 bar, insbesondere 1.5 bar bis 1 bar, als Startdruck vorzusehen. Kleine Startdrücke treten insbesondere dann auf, wenn nicht genügend Vordruck zur Verfügung steht, oder ein Bremsvorgang des Fahrzeuges im Fahrbetrieb durch einen Fahrer eingeleitet wird.

Eine besonders vorteilhafte Ausgestaltung sieht vor, dass das Verfahren vor Fahrtantritt und/oder nach einem Bremsvorgang des Fahrzeuges ausgeführt wird. Diese Ausgestaltungsform präzisiert den Startzeitpunkt für das Verfahren. Der Zeitpunkt für das Ausführen des Verfahrens muss in geeigneter Weise ausgewählt werden. Aufgrund der Höhe des Startdruckwertes in der Steuerverbindung ist eine Durchführung des Verfahrens im Stand/bei Stillstand des Fahrzeuges bevorzugt bzw. bei einem hohen Druckwert, von beispielsweise 6 bar, nur im Stand des Fahrzeuges möglich, so dass im letzen Fall lediglich zwei Zeitpunkte möglich sind, nämlich einmal nach dem Lösen des Handbremsventils und ein anderes Mal nach einem Bremsvorgang des Fahrzeuges durch den Fahrer, welcher zum Stillstand des Fahrzeuges führt (z. B. an einer Ampel). Für das Druckbeaufschlagen der Steuerverbindung (Druckaufbauphase) wird eine Zeit von ca. t = 400 ms benötigt. Es sind aber auch kürzere Druckbeaufschlagungszeiten möglich. Weiterhin wird für das Öffnen der Steuerleitung und das Erfassen des Druckverlaufes eine Zeit von t = 800ms benötigt, so dass insgesamt eine Zeit von t = 1200ms für das erfindungsgemäße Verfahren zur Verfügung stehen sollte. Die Zeitdauer für einen Stopp des Fahrzeuges an einer Ampel ist also in den meisten Fällen ausreichend, um das erfindungsgemäße Verfahren durchzuführen.

Eine weitere bevorzugte Ausgestaltung sieht vor, dass vor dem Beaufschlagen der Steuerverbindung mit Druck ein Lösen eines Feststellbremsventils des Fahrzeuges erfolgt. Hierbei wird zunächst geprüft, ob sich das Fahrzeug im Stillstand befindet und ob die Feststellbremse gelöst bzw. das Feststellbremsventil des Fahrzeuges geöffnet ist.

Eine bevorzugte Ausgestaltungsform betrifft ein Verfahren, bei welchem die Steuerverbindung vor dem Beaufschlagen der Steuerverbindung mit Druck nur teilweise entleert wird. Bevorzugt ist es hierbei vorgesehen, dass die Steuerverbindung nicht vollständig entleert wird, da hierdurch der zu beaufschlagende Druck dann geringer als bei einem vollständigen Entleeren der Steuerverbindung ist. Eine zeitnahe oder schnelle Druckbeaufschlagung der Steuerverbindung ist insbesondere nach dem Lösen der Feststellbremse des Fahrzeuges vorgesehen, wobei der Feststelldruck dann nicht vollständig zur Umgebung entlüftet wird, sondern teilweise für den Sollwertdruck verwendet wird. Das Lösen der Feststellbremse wird über eine (Druck-)Überwachung der Steuerleitung festgestellt, insbesondere in dem Fall, wenn keine elektronische Feststellbremse oder kein Schaltsignal vorhanden ist.

Eine vorteilhafte Ausgestaltung sieht vor, dass das Öffnen der Steuerverbindung erst nach einem Erreichen eines stabilen Druckniveaus in der Steuerverbindung ausgeführt wird. Hierbei ist es insbesondere vorgesehen, dass das Lösen der Feststellbremse bzw. ein Öffnen des Feststellbremsventils des Fahrzeuges zeitnah erkannt wird, d. h. in einem Bereich von 50 bis 100 ms. Sofort nach dem Erkennen wird die Beaufschlagung der Steuerverbindung mit Druck eingeleitet, noch bevor der Druck in der Steuerverbindung auf null bzw. Atmosphärendruck sinkt. Ein sofortiges Beaufschlagen der Steuerverbindung mit Druck, ohne das die Steuerverbindung vollständig entleert wird, kann jedoch zu einer instabilen Phase in der Steuerverbindung, d. h. Druck-Schwankungen des Druckniveaus um bis zu ± 0.5 bar in der Steuerverbindung führen. Vorteilhaft ist es deshalb die Steuerverbindung zur Umgebung erst dann zu Öffnen, wenn sich eine stabile Phase/ein stabiles Druckniveau, d. h. Schwankungen des Druckniveaus von kleiner ± 0.2 bar, eingestellt hat.

Eine weitere Ausgestaltungsform sieht vor, dass das Auswerteergebnis einem dritten Betriebszustand des Fahrzeuges zugeordnet wird, wenn der Betriebszustand weder dem ersten noch dem zweiten Betriebszustand des Fahrzeuges zugeordnet werden kann. Bei dem dritten Betriebszustand handelt es sich um einen sogenannten unbekannten Zustand, der weder eindeutig dem ersten Zustand des Fahrzeuges, beispielsweise dem Zustand des Fahrzeuges mit Anhänger, noch dem zweiten Zustand des Fahrzeuges, beispielsweise dem Zustand des Fahrzeuges ohne Anhänger, zugeordnet werden kann. Bei einer möglichen Ausgestaltung der Erfindung, insbesondere bei einer Differenzenbildung aus Entlüftungszeit und Referenzentlüftungszeit, entspricht der dritte unbekannte Zustand einem Differenzwertebereich aus Entlüftungszeit minus Referenzentlüftungszeit von $\Delta t = |\pm 50|$ bis $|\pm 200|$ ms.

Eine weitere Ausgestaltungsform sieht vor, dass nach dem Zuordnen des dritten Betriebszustandes, das Verfahren wiederholt wird, bis das Auswerteergebnis dem ersten oder zweiten Betriebszustand zugeordnet wird. Hierbei wird das Verfahren solange wiederholt, bis ein Betriebszustand des Fahrzeuges dem ersten oder zweiten Betriebszustand, insbesondere einem Zustand des Fahrzeuges mit oder ohne Anhänger, zugeordnet werden kann oder eine Korrektur/Anpassung der Referenzentlüftungszeit notwendig ist.

Ausführungsbeispiele der Erfindung werden nachfolgend anhand der Figuren im Vergleich zum Stand der Technik, welcher zum Teil ebenfalls dargestellt ist, beschrieben. Diese soll die Ausführungsbeispiele nicht notwendigerweise maßstäblich darstellen, vielmehr sind die Figuren, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei in der Beschreibung, den Figuren und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlicher Funktion sind, dort wo sinnvoll der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsbeispiele sowie anhand der Figuren. Im Einzelnen zeigen:

- Fig. 1 eine Messung von mehreren zeitlichen Druckverläufen nach dem Lösen eines Handbremsventils und nach einem Drucksollwertsprung,
- Fig. 2 ein schematisches Ablaufdiagramm gemäß einer möglichen Ausgestaltungsform des Verfahrens,
- Fig. 3 zwei Druckzeitdiagramme mit jeweils einem erfassten zeitlichen Druckverlauf,
- Fig. 4 ein schematisches Ablaufdiagramm gemäß einer weiteren möglichen Ausgestaltungsform des Verfahrens,
- Fig. 5 eine schematische Darstellung einer möglichen Ausgestaltungsform des elektro-pneumatischen Systems eines Fahrzeuges,
- Fig. 6 ein schematisches Ablaufdiagramm für eine Anpassung/Korrektur des Referenzwerts in einer möglichen Ausgestaltungsform des Verfahrens, und
- Fig. 7 ein schematisches Ablaufdiagramm gemäß einer weitern möglichen Ausgestaltungsform des Verfahrens.

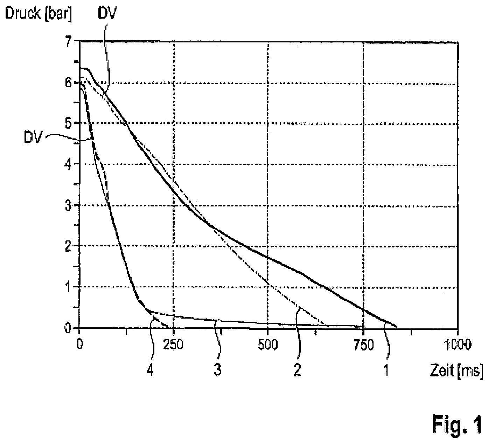

Fig. 1 zeigt ein Druckzeitdiagramm, wobei in dem Diagramm mehrere zeitliche Druckverläufe DV eines Fahrzeuges dargestellt sind. Die Druckwerte auf der Druckachse werden in der SI-Einheit [bar] und die Zeitwerte auf der Zeitachse in [ms] angegeben.

In dem Diagramm sind insgesamt vier verschiedene Zeit-Druckverläufe 1, 2, 3, 4 beim Entlüften einer Anhängersteuerverbindung, insbesondere einer pneumatischen Steuerleitung, eines Fahrzeuges dargestellt, nämlich einmal der Zeitdruckverlauf DV nach einem Lösen eines Handbremsventils eines Fahrzeuges und ein anderes Mal nach einer definierten Druckbeaufschlagung der Steuerverbindung und einem anschließenden Entlüften der Steuerverbindung zur Umgebung oder Atmosphäre. Die Anhängersteuerverbindung ist insbesondere als eine pneumatische Steuerleitung ausgebildet und Teil des pneumatischen Systems des Fahrzeuges und darüber hinaus konfiguriert mittels eines Anhängersteuerventils an ein pneumatisches System eines Anhängers anzukoppeln.

Insgesamt sind in der Fig. 1 vier zeitliche Druckverläufe DV dargestellt, nämlich einerseits nach dem Entlüften der Steuerleitung nach dem Öffnen eines Handbremsventils, insbesondere einmal für den Betriebszustand des Fahrzeugs mit angekoppelten Anhänger 1 und ein anderes Mal für den Betriebszustand ohne Anhänger 2 und andererseits nach einem Sollwertsprung, wiederum bei dem gleichen Fahrzeug, einmal mit Anhänger 3 und ein weiteres Mal ohne Anhänger 4. Ein Sollwertsprung wird in der vorliegenden Anmeldung als ein Drucksollwertsprung verstanden, wobei es sich hierbei um ein definiertes Beaufschlagen der Steuerleitung mit einem Soll-Druckwert handelt, gefolgt von einem Entlüften der Steuerleitung zur Umgebung. Vorliegend wird die Steuerleitung beispielhaft mit einem Eingangsdruck von im Wesentlichen 6 bar beaufschlagt, wobei im Wesentlichen bedeutet, das geringe Abweichung des Eingangsdruckes von $\pm$ 0.1 bar vernachlässigt werden können. Nach dem Öffnen der Steuerverbindung zur Umgebung oder Atmosphäre wird ein Druckausgleich in der Steuerverbindung angestrebt, so dass der Druck in der Steuerverbindung auf einen Ausgangsdruck von im Wesentlichen 0 bar fällt.

Die in der Fig. 1 gezeigten Druckverläufe 1, 2, 3, 4 zeigen also ein Druckverhalten in der Steuerverbindung oder Steuerleitung eines Fahrzeuges nach dem Öffnen der Steuerverbindung zu der Atmosphäre beziehungsweise Umgebung. Aus den Druckverläufen lässt sich jeweils eine Entlüftungszeit für die Steuerverbindung des Fahrzeuges in den verschiedenen Betriebszuständen ermitteln, wobei die Entlüftungszeit, die Zeitdauer zwischen dem Öffnen der Steuerverbindung zur Umgebung und dem Erreichen eines (Grenz-)Druckes in der Steuerverbindung abbildet. Anders ausgedrückt können in einer Ausgestaltungsform der Erfindung den verschiedenen Druckverläufen jeweils die einzelnen Fahrzeugzustände oder Betriebszustände, nämlich Fahrzeug mit Anhänger oder ohne Anhänger, über die verschiedenen Entlüftungszeiten zugeordnet werden.

Die Entlüftungszeiten der Steuerverbindung nach dem Lösen eines Handbremsventils liegen in einem Bereich von über T = 550 ms (vgl. Druckverläufe 1, 2 in der Fig. 1). Die Unterschiede der Entlüftungszeiten für die beiden Druckverläufe 1 und 2 (jeweils nach dem Lösen des Handbremsventils), stellvertretend für die zwei Betriebszustände des Fahrzeuges, nämlich mit und ohne Anhänger, liegen bei der vorliegenden (Einzel-)Messung bei circa 175 ms. Bei der Durchführung einer großen Anzahl von Messungen von Entlüftungszeiten nach dem Lösen des Handbremsventils hat sich gezeigt, dass die Entlüftungszeiten im Mittel zwischen 550 ms und 650 ms liegen, wobei eine große Streuung mit Entlüftungszeiten von bis zu 900 ms vorlag. Es wurde festgestellt, dass eine Zuordnung von Entlüftungszeiten zu den Betriebszuständen des Fahrzeuges mit oder ohne Anhänger (Anhänger- oder Solobetrieb) - nach dem Lösen der Feststellbremse bzw. dem Öffnen des Handbremsventils - nicht möglich ist, da die Unterschiede der Entlüftungszeiten zu gering sind.

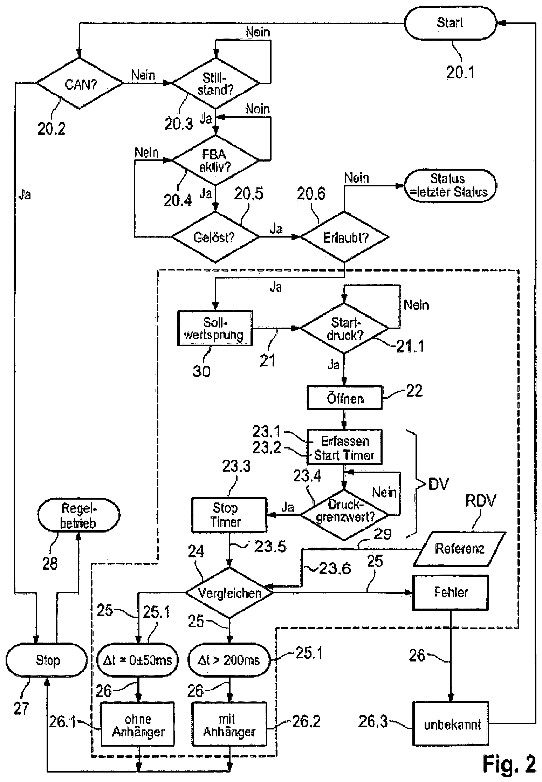

Anders ist die Situation bei der Messung eines zeitlichen Druckverlaufes DV nach einem Sollwertsprung. Insbesondere in einem Druckbereich von circa 0,5 bar ändert sich die Steigung bei den unterschiedlichen Betriebszuständen des Fahrzeuges, nämlich mit und ohne Anhänger, deutlich (vgl. 1 und 2 in der Fig. 2). Die Änderung der Steigung ist abhängig von dem zu entlüftenden Volumen der Steuerleitung, welches mit angekoppeltem Anhänger größer als im Solobetrieb ist. Hieraus resultiert der Unterschied in den gemessenen Entlüftungszeiten von ca. 750 ms mit angekoppeltem Anhänger zu ca. 250 ms ohne angekoppelten Anhänger. Es hat sich insbesondere gezeigt, dass die Messung der Entlüftungszeit der Steuerleitung ein gutes Kriterium ist, um festzustellen, ob ein Anhänger angekoppelt ist oder nicht. Als Unterscheidungskriterium kann aber nicht nur die Entlüftungszeit, sondern auch die zeitliche Änderung bzw. Ableitung des zeitlichen Druckverlaufes, bevorzugt im Bereich von 0,5 bar, herangezogen werden.

Der Unterschied in den Entlüftungszeiten zwischen den beiden Situationen, nämlich einmal nach dem Lösen des Handbremsventiles und ein anderes Mal nach einem Sollwertsprung ist in der Wirkungsweise des Anhängersteuerventiles begründet. Wird nämlich das Handbremsventil eines Fahrzeuges von einer Parkstellung in eine Fahrstellung geschaltet, so wird während der Entlüftung der Steuerverbindung gleichzeitig Druck im Anhängersteuerventil aufgebaut, um das Anhängersteuerventil in Fahrbereitschaft zu versetzen. Demgegenüber wird nach einem Sollwertsprung oder nach einer Fahrerbremsung die Steuerverbindung ohne ein "Nachregeln" oder "Einschwingen" entlüftet.

Der zeitliche Druckverlauf DV, die Entlüftungszeit und/oder die Änderungen des zeitlichen Druckverlaufes DV in der Steuerleitung nach einem Sollwertsprung erweist sich insgesamt als ein geeignetes Kriterium, um den Betriebszustand eines Fahrzeuges festzustellen. Besonders bei hohen Sollwertsprüngen ist eine Unterscheidung zwischen den einzelnen Betriebszuständen des Fahrzeuges, insbesondere mit oder ohne Anhänger, deutlich erkennbar.

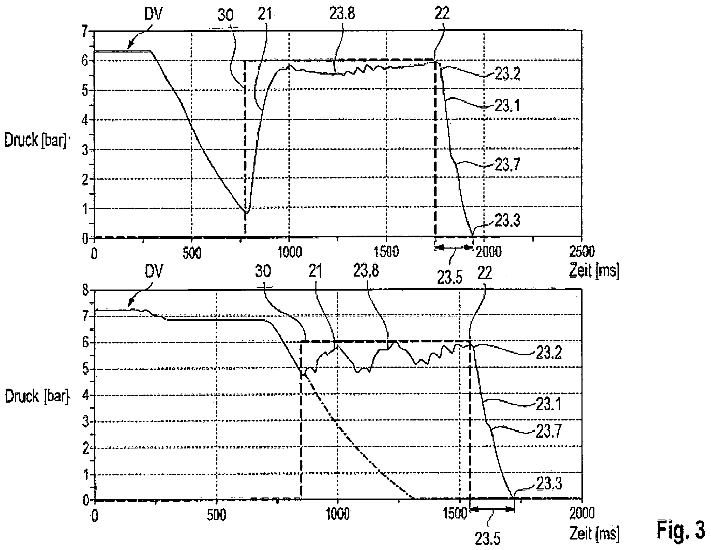

Fig. 2 zeigt ein schematisches Ablaufdiagramm gemäß einer möglichen Ausgestaltungsform des Verfahrens mit einem Soll- oder Drucksollwertsprung 30, dass (zeitlich) nach einem Öffnen eines Feststellbremsventil eines Fahrzeuges ausgeführt wird. Insbesondere dargestellt ist die - dem Verfahren zu Grunde liegende - Logik für das Erfassen und Auswerten der zeitlichen Druckverläufe DV zum Erkennen eines Betriebszustandes des Fahrzeuges, insbesondere ob ein Anhänger über eine Steuerleitung an das Fahrzeug angekoppelt ist oder nicht. Der - zu dem in der Fig. 2. dargestellten Verfahren - korrespondierende Druckverlauf (DV) ist in der Fig. 3 dargestellt. Der Kern des Verfahrens ist von der gestrichelten Linie (vgl. Fig. 2) umrandet.

Zunächst wird das Verfahren zum Erkennen von einem Betriebszustand eines Fahrzeuges, in der vorliegenden Anmeldung auch Erkennungsverfahren genannt, durch einen Aufruf, beispielsweise mittels eines Bremsmanagementsystems, beim Starten des Fahrzeugs gestartet 20.1. Bevor jedoch ein Sollwertsprung 30 ausgeführt wird, wird eine Reihe von Vorprüfungen 20.2 bis 20.6 ausgeführt, wobei zuerst geprüft wird, ob eine Erkennung des Betriebszustandes über ein CAN-Signal 20.2 oder über eine andere verfügbare interne Größe möglich ist. Ist eine (Anhänger-)Erkennung über ein CAN-Signal 20.2 möglich, wird anschließend das Erkennungsverfahren beendet 27 und zurück auf den Regelbetrieb des Fahrzeuges geschaltet 28.

Für den Fall, dass eine Erkennung über ein CAN-Signal 20.1 nicht möglich ist, erfolgt eine Erkennung des Betriebszustandes des Fahrzeuges gemäß dem Erkennungsverfahren, insbesondere über ein Erfassen und Auswerten zeitlicher Druckverläufe DV nach einem Drucksollwertsprung. Zunächst wird aber geprüft, ob die weiteren Voraussetzungen für ein Durchführen des Erkennungsverfahrens vorliegen, insbesondere ob sich das Fahrzeug im Stillstand befindet 20.3, ob die Feststellbremse aktiv ist 20.4, und ob die Feststellbremse gelöst 20.5, insbesondere das Feststellbremsventil geöffnet ist. Sind alle Voraussetzungen für ein Durchführen des Erkennungsverfahrens erfüllt kann weiter vorgefahren werden.

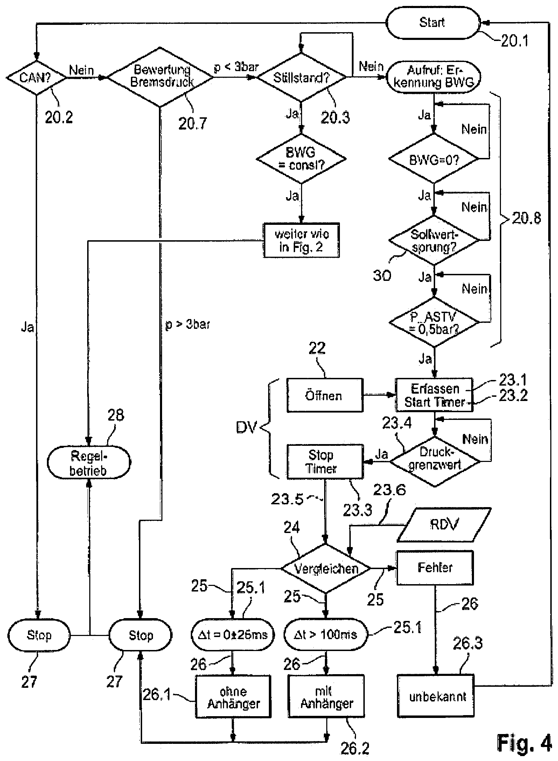

Für das Ausführen des Erkennungsverfahrens, muss nämlich ein geeigneter Zeitpunkt gewählt werden. Aufgrund der Höhe des Sollwertsprunges - von beispielsweise 6 bar - ist eine Durchführung des Erkennungsverfahrens im Stand bevorzugt. Insgesamt wird für das Erkennungsverfahren eine Zeit von ca. t = 1200 ms benötigt. Es können aber auch kürzere Zeiten realisiert sein. Hiervon ausgehend kommen zwei mögliche Zeitpunkte in Betracht, nämlich einmal nach dem Lösen des Handbremsventils und ein anderes Mal nach einem Bremsvorgang des Fahrzeuges durch den Fahrer, der zum Stillstand des Fahrzeuges führt (z. B. an einer Ampel). In der Fig. 2 ist die erste Möglichkeit, nämlich der Zeitpunkt nach dem Lösen des Feststellventils dargestellt. Die andere Möglichkeit, der Zeitpunkt nach einer Bremsung des Fahrzeuges durch den Fahrer ist in Fig. 4 dargestellt und beschrieben (vgl. Beschreibung zu Fig. 4 unten).

Bei einem Fahrzeug mit angekoppeltem Anhänger beträgt die (maximale) Entlüftungszeit nach einem Sollwertsprung bis zu 800 ms (vgl. Fig. 1 oben). Zusammen mit der notwendigen Druckaufbauphase (t = 400 ms) werden also insgesamt ca. t=1200 ms für die Durchführung des Erkennungsverfahrens benötigt, in der das Fahrzeug (idealerweise) steht. Der Entlüftungsvorgang durch das Lösen des Handbremsventils mit angekoppeltem Anhänger dauert ca. 800 ms. Daher bietet es sich an, diesen Zeitraum zu nutzen, da der Fahrer in jedem Fall auf die "Freigabe des Fahrzeuges" bzw. auf die Belüftung der Federspeicher warten muss. Wird z. B. das Lösen der Handbremse zeitnah erkannt, so kann das erfindungsgemäße Verfahren schnellstmöglich gestartet werden. Im idealen Fall verlängert sich die Wartezeit für den Fahrer um loszufahren nur geringfügig, in einem Bereich von ca. 500 ms. Darüber hinaus verläuft ein Teil des Druckverlaufs (beim Fahrzeug mit Anhänger) in einem Druckbereich unterhalb 0,5 bar, so dass je nach Beschaffenheit des Anhängers, die Bremsen/Bremsbacken des Anhängers gar nicht mehr anliegen und das Fahrzeug schon bewegt werden kann. In der Regel betätigt der Fahrer beim Lösen des Handbremsventils den Bremswertgeber, um ein Wegrollen des Fahrzeuges zu verhindern. Um den Druckverlauf in der Steuerleitung nicht zu verfälschen, muss der vom Fahrer erzeugte Sollwert für das Erkennungsverfahren weggeschaltet werden. Gleiches gilt dann allerdings auch für eine Erkennung nach einer Bremsung an einer Ampel. Problematisch ist dies für den Fall, dass ein Festsetzen des Fahrzeuges ohne Wissen des Fahrers ausgeführt wird und der Fahrer den Fuß vom Bremswertgeber nimmt, um weiterzufahren. Hierbei kann es dann vorkommen, dass die Bremsen des Anhängers noch anliegen, so dass ein Losfahren (noch) nicht möglich ist. In einer Ausgestaltung wird nach dem Lösen des Fußes vom Fahrer von dem Bremswertgeber das Erkennungsverfahren deshalb sofort abgebrochen.

Das Erkennen des Öffnens des Handbremsventils kann entweder indirekt durch die Überwachung des Druckverlaufes DV in der Steuerleitung erfolgen oder - falls im Fahrzeug verfügbar - direkt über eine CAN-Verbindung/ein CAN-Signal vom Handbremsventil. Wie oben beschrieben führt das Lösen des Handbremsventiles zu einer Entlüftung der Steuerleitung. Ist die Steuerleitung nach dem Lösen ganz oder teilweise entleert, kann ein Drucksollwertsprung ausgeführt werden.

Sind die notwendigen Voraussetzungen für einen Drucksollwertsprung 30 (noch) nicht erfüllt, werden von dem Erkennungsverfahren die notwendige Prüfschleifen solange ausgeführt, bis alle Voraussetzungen erfüllt sind um einen Drucksollwertsprung auszuführen (vgl. Bezugszeichen 20.3 bis 20.5 in der Fig. 2). Vor dem Ausführen des Drucksollwertsprunges wird zunächst nun noch einmal geprüft, ob ein Ausführen auch tatsächlich zulässig ist 20.6. Ein Drucksollwertsprung 30 kann zum Beispiel nicht erlaubt sein, wenn dass Fahrzeug in einer Parkposition mit Gefälle abgestellt ist oder sich in der Werkstatt befindet.

Ist ein Drucksollwertsprung 30 zulässig, wird die Steuerleitung mit Druck beaufschlagt, bis sich ein konstantes Druckniveau, insbesondere von im Wesentlichen 6 bar, eingestellt (vgl. Bezugszeichen 21 in der Fig. 2 und Fig. 3). Während des Druckbeaufschlagens 21 wird von einer Prüfroutine kontinuierlich geprüft, ob der Startdruck 21.1 vorliegend von 6 bar in der Steuerleitung erreicht ist. Sobald der Startdruck (z. B. 6 bar) erreicht ist, kann anschließend die Steuerleitung über ein Entlüftungsventil zur Atmosphäre oder Umgebung geöffnet werden 22, so dass es zu einem Druckausgleich, insbesondere Druckabfall, in der Steuerleitung beziehungsweise zu einem Entlüften der Steuerleitung kommt.

Der Zeitpunkt für das Ausführen des Drucksollwertsprunges 30 hängt im Wesentlichen von dem Erkennen des Lösens des Handbremsventiles ab. In der Fig. 3 ist im oberen Bereich der Fall einer späten Erkennung (t > 500ms) und im unteren Bereich ein schnelles Erkennen (t < 300ms) dargestellt. Im oberen Fall ist der Druck in der Steuerleitung bereits stark abgefallen und die Steuerleitung muss wieder (komplett) belüftet, insbesondere mit Druck beaufschlagt werden. In dem unteren Fall wird das Lösen des Handbremsventiles unmittelbar zu Beginn des Druckabfalles festgestellt, so dass - nach einer kurzen Reaktionszeit - die Steuerleitung wieder belüftet werden kann, was vorteilhaft ist, da die Höhe des notwendigen Druckaufbaues geringer ist und sich somit die totale Zeit für das Erkennungsverfahren reduziert. Jedoch ist im letzten Fall ein Ausregeln einer stabilen Druckphase in der Steuerleitung, d. h. eine geringe Schwankungen des Druckes um 6 bar schwieriger, da gleichzeitig noch die Belüftung weiterer Anschlüsse erfolgt.

Bei dem in der Fig. 2 dargestellten Erkennungsverfahren wird gleichzeitig beim Öffnen 22 des Entlüftungsventiles zur Entlüftung der Steuerleitung ein Timer/Zeitmesser zur Berechnung/Erfassung der Entlüftungszeit der Steuerleitung gestartet 23.1. Sobald der Druck in der Steuerleitung einen unteren Druckgrenzwert 23.4, z. B. Atmosphärendruck, erreicht wird der Timer/Zeitmesser gestoppt 23.3. Während der Zeiterfassung, d. h. während der Entlüftung der Steuerverbindung, insbesondere während des Druckausgleiches, wird der Druck/der zeitliche Druckverlauf DV, insbesondere das Druckverhalten in der Steuerverbindung, mittels eines Drucksensors erfasst 23.2. Nach Beendigung des Drucksollwertsprungs kann das Fahrzeug bewegt werden.

Zur Auswertung des erfassten Druckverlaufes DV oder der erfassten Entlüftungszeit (vgl. Bezugszeichen 23.5 in der Fig. 3) wird der Druckverlauf DV bzw. die Entlüftungszeit mit einem Referenzdruckverlauf RDV und/oder einer Referenzentlüftungszeit 23.6 verglichen 24, beispielsweise mittels einer Differenzbildung aus der erfassten Entlüftungszeit 23.5 und der Referenzentlüftungszeit 23.6. Der Vollständigkeit halber sei hier noch einmal erwähnt, dass sich in einfacher Weise aus dem Druckverlauf DV oder aus dem Referenzdruckverlauf RDV eine korrespondierende Entlüftungszeit 23.5, 23.6 ermitteln lässt, nämlich aus der Differenz aus dem Zeitpunkt für das Öffnen 22 der Steuerleitung und dem Zeitpunkt für das Erreichen des Druckgrenzwertes 23.4.

Als Referenzentlüftungszeit 23.6 wird beispielsweise die Entlüftungszeit der Steuerleitung im Betriebszustand des Fahrzeuges ohne angekoppelten Anhänger verwendet, welche als (theoretisches) Modell vorliegt und/oder als unter kontrollierten Bedingungen erfasste Entlüftungszeit. Ohne Einschränkung ist es auch möglich, die Entlüftungszeit der Steuerleitung im Betriebszustand des Fahrzeuges mit angekoppeltem Anhänger zu verwenden.

Ist der Differenzwert aus erfasster Entlüftungszeit 23.5 und Referenzentlüftungszeit 23.6, wobei die Referenzentlüftungszeit eine Entlüftungszeit ohne Anhänger repräsentiert, größer als $\Delta t$ = +200 ms, so wird mit dem Erkennungsverfahren für einen Betriebszustand des Fahrzeuges mit Anhänger 26.2 entschieden. Ist die Differenz hingegen 0 oder in einem Bereich von $\Delta t$ = +/- 50 ms, so wird für einen Solobetrieb des Fahrzeuges, d. h. ohne Anhänger 26.3, entschieden.

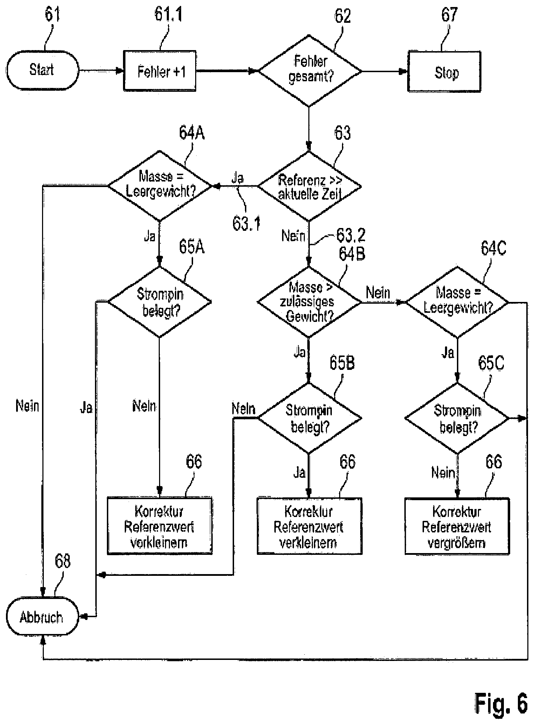

Liegt der ermittelte Differenzwert aus erfasster Entlüftungszeit 23.5 und Referenzentlüftungszeit 23.6 dazwischen, d. h. im Bereich zwischen Solo- und Anhängerbetrieb, also in einem Bereich $\Delta t$ = +50 ms bis +200 ms oder aber ist kleiner als $\Delta t$ = -50 ms, so wird ein Fehler bzw. eine Fehlermeldung ausgegeben. In diesem Fall wird eine Fehlerregelung oder Fehlerroutine ausgeführt, derart, dass der Status des Betriebszustandes des Fahrzeuges auf eine unbekannt Status 26.1 gesetzt wird und das Bremsmanagementsystem das Erkennungsverfahren noch einmal wiederholen, um eine erneute Erkennung des Betriebszustandes auszuführen. Hierbei wird beispielsweise ein interner erster Fehlerzähler (nicht dargestellt) um + 1 erhöht. Wird nach einem wiederholten Male ein maximaler Wert mit dem ersten Fehlerzähler, von beispielsweise 5 erreicht, so kann es vorgesehen sein, dass das Verfahren eine Korrektur oder eine Anpassung der Referenzentlüftungszeit vorsieht (vgl. hierzu auch Fig. 6 unten).

Fig. 3 zeigt ein Druck-Zeitdiagramm mit einer Druck-Zeit-Kurve für einen zeitlichen Druckverlauf DV oder ein Druckverhalten in der Steuerleitung während dessen, dass - in der Fig. 2 dargestellte - Erkennungsverfahren bzw. die jeweiligen Schritte ausgeführt werden, insbesondere während eines Drucksollwertsprunges 30. Die Werte auf der Druckachse werden in der SI-Einheit [bar] und die Werte auf der Zeitachse in [ms] angegeben.

Der Zeitpunkt für das Ausführen des Drucksollwertsprunges 30 hängt im Wesentlichen von dem Erkennen des Lösens des Handbremsventiles ab. In Fig. 3 ist im oberen Teil der Fall einer späten Erkennung (t > 500ms) dargestellt und im unteren Teil ein schnelles Erkennen (t < 200ms). Im oberen Fall ist der Druck in der Steuerleitung bereits stark abgefallen und die Steuerleitung muss wieder komplett belüftet, insbesondere mit Druck beaufschlagt werden. In dem unteren Fall wird das Lösen des Handbremsventiles unmittelbar zu Beginn des Druckabfalles festgestellt, so dass nach einer kurzen Reaktionszeit, die Steuerleitung wieder belüftet werden kann, was vorteilhaft ist, da die Höhe des notwendigen Druckaufbaues kleiner ist und sich somit die totale Zeit für das Erkennungsverfahren reduziert. Jedoch ist im unteren Fall ein Ausregeln einer stabilen Druckphase/-niveaus in der Steuerleitung, d. h. geringe Schwankungen des Druckes um 6 bar schwieriger, da gleichzeitig noch die Belüftung weiterer Anschlüsse erfolgt.

Der in der Fig. 3 gezeigte erste Druckabfall in dem Druckzeitverlauf DV, insbesondere im oberen Diagramm, repräsentiert das Lösen des Feststellbremsventiles, wobei die Steuerverbindung/Steuerleitung entlüftet wird. Ist die Steuerleitung teilweise oder vollständig entlüftet (vgl. oberer oder unterer Teil des Diagramms), wird die Steuerleitung anschließend wieder mit Druck bis zu einem bestimmen Startdruck beaufschlagt, insbesondere bis sich ein stabiles Druckniveau von circa 6 bar in der Steuerleitung einstellt. Anschließend wird die Steuerleitung gegenüber der Umgebung (Atmosphäre) mittels eines Entlüftungsventiles geöffnet 22 und gleichzeitig ein Timer gestartet 23.1. Sobald der Druck in der Steuerleitung einen unteren Grenzwert erreicht hat, bevorzugt von 0 bar, wird der Timer gestoppt 23.1. Aus der erfassten Druck- und Zeitmessung wird dann eine Entlüftungszeit für die Steuerverbindung/Steuerleitung ermittelt.

Fig. 4 zeigt ein schematisches Ablaufdiagramm gemäß einer weiteren möglichen Ausgestaltungsform des erfindungsgemäßen Verfahrens nach einer Fahrerbremsung mittels Betätigen eines Bremswertgebers durch einen Fahrer. Ein möglicher Zeitpunkt für die Durchführung des Erkennungsverfahrens ist hierbei z. B. das Halten des Fahrzeuges an einer Ampel. Da der Fahrer den Bremswertgeber hierbei aber jederzeit wieder lösen kann, ohne das es hierfür vorher Anzeichen gibt, darf die Entlüftungszeit durch das Erkennungsverfahren nicht länger dauern, als dies typischerweise vom Fahrer erwartet wird.

Wie oben beschrieben ist für das Erkennungsverfahren, insbesondere für die Be- und Entlüftung der Steuerverbindung, insgesamt eine Zeitdauer von ca. 1200 ms nötig, um das Fahrzeug anschließend wieder bewegen zu können. Grundsätzlich reicht die Dauer eines Stillstands an einer Ampel hierfür aus, allerdings muss das Erkennungsverfahren unmittelbar nach dem Lösen des Bremswertgebers durch den Fahrer abgebrochen werden.

Als weitere Möglichkeit besteht deshalb auch die Auswertung der Entlüftungszeit nach einer Bremsung, ohne das der Wagen zum tatsächlich Stillstand kommt. Der berechnete Solldruck durch das Bremsenmanagement hängt von der Betätigung des Bremswertgebers ab. Beim Verringern der Betätigung des Bremswertgebers durch den Fahrer besteht ab einem bestimmten Zeitpunkt keine Abhängigkeit mehr zum Bremsdruck. Dies hat zur Folge, dass unterhalb eines bestimmten Bremsdruckes von 0,5 bar kein Bremsdruck mehr erzeugt wird und der Druck (direkt) auf 0 bar fällt, was somit einem (kleinen) Sollwertsprung 30 von 0,5 bar entspricht. Grundsätzlich kann auch für diesen Sollwertsprung 30 eine Entlüftungszeit erfasst und mit einer Referenzentlüftungszeit verglichen werden. Aufgrund der geringen Höhe des Sollwertsprunges 30 streuen die Werte für die Entlüftungszeit aber sehr stark. Die hohe Streuung kann allerdings durch eine Vielzahl von Messungen kompensiert werden. Vorteilhaft ist es deshalb, im laufenden Betrieb des Fahrzeuges automatisch sehr viele kleine Messungen oder Sollwertsprünge 30 auszuführen und die erfassten Entlüftungszeiten zu mitteln. Der Ablauf des Erkennungsverfahrens ist dabei ähnlich wie bei dem in der Fig. 2 voran beschriebenen Verfahren.

Zunächst wird das in der Fig. 4 dargestellte Erkennungsverfahren durch ein Betätigen des Bremswertgebers durch einen Fahrer gestartet. Wiederum (vgl. auch Fig. 2) wird zunächst geprüft, ob ein Erkennen des Anhängers mittels eines CAN-Signales ausgeführt werden kann 20.2. Bei einem verfügbaren CAN-Signal wird diesen genutzt und das Erkennungsverfahren beendet 27 und/oder weiter in den Regelbetrieb 28 der Bremsanlage geschaltet. Ist kein CAN-Signal vorhanden, wird mit dem Erkennungsverfahren fortgefahren, wobei zunächst der Bremsdruck bzw. die Betätigung des Bremswertgebers bewertet 20.7 wird. Wird ein hoher Bremsdruck ($p > 3$ bar) gemessen, wird das Erkennungsverfahren abgebrochen/gestoppt 27, da es sich (möglicherweise) um ein unerwartetes Hindernis oder eine Gefahrensituation handelt. In diesem Fall dürfen die Stabilitätsregelfunktionen nicht beeinträchtigt werden und besitzen Vorrang vor dem Erkennungsverfahren. Ist der erfasste Bremsdruck gering ($p < 3$ bar) bzw. handelt es sich bei der Verzögerung um eine "gemäßigte" Bremsung des Fahrzeuges, wird mit dem Erkennungsverfahren weiter fortgefahren.

Möglich sind in diesem Fall zwei Varianten. Zum einen eine Erkennung, die im Stillstand durchgeführt wird, hierfür wird zunächst geprüft, ob das Fahrzeug tatsächlich zum Stillstand 20.3 kommt. Die andere Möglichkeit ist eine Betätigung des Bremswertgebers und anschließend wieder Lösen des Bremswertgebers, ohne dass das Fahrzeug zum Stillstand kommt (s. o. kleiner Sollwertsprung von 0.5 bar). Solange die Fahrzeuggeschwindigkeit ungleich 0 km/h ist, wartet das Erkennungsverfahren bzw. eine entsprechende Prüfroutine ab, ob der Fahrer das Fahrzeug zum Stillstand bringt oder ob nur die Geschwindigkeit verringert und anschließend der Bremswertgeber wieder gelöst wird, bevor das Fahrzeug zum Stehen kommt.

Kommt das Fahrzeug zum Stillstand wird ein Erkennungsverfahren wie in Fig. 2 dargestellt ausgeführt, wobei ab dem Zeitpunkt des Stillstandes kontinuierlich geprüft wird, ob der Fahrer den Bremswertgeber weiterhin betätigt. Solange dies der Fall ist kann ein Sollwertsprung 30 (wie oben beschrieben) durchgeführt werden. Mit Hilfe des Sollwertsprungs 30 werden dann über den Timer eine Entlüftungszeit erfasst und anschließend ausgewertet (vgl. Fig.2 und entsprechende Beschreibung zu der Fig. 2 oben).

Für den Fall, dass die Geschwindigkeit des Fahrzeuges nur verringert wird (ohne Stillstand), muss die Betätigung des Bremswertgebers BWG überwacht werden, bis dieser gelöst wird 20.8. Durch das Lösen des Fußes des Fahrers vom Bremswertgeber BWG entsteht ein Sollwertsprung 30 von 0,5 bar. Mit dem Starten des Timers muss jedoch gewartet werden, bis der (Ist-)Druck in der Steuerverbindung einen Druckwert von 0,5 bar erreicht hat, um eine Vergleichbarkeit zu gewährleisten. Die weitere Verfahrensschritte sind wiederum identisch/ähnlich zu dem Verfahren, wie es in der Fig. 2 dargestellt ist, wobei naturgemäß die Differenzwerte bei einem kleinen Sollwertsprung anders, insbesondere geringer, ausfallen. Ist der Differenzwert aus erfasster Entlüftungszeit 23.5 und Referenzentlüftungszeit 23.6, wobei die Referenzentlüftungszeit 23.6 eine Entlüftungszeit ohne Anhänger repräsentiert, größer als $\Delta t = +100$ ms, so wird bei dem Erkennungsverfahren für einen Betriebszustand des Fahrzeuges mit Anhänger 26.2 entschieden. Ist die Differenz hingegen 0 oder in einem Bereich von $\Delta t = +/- 25$ ms, so wird für einen Solobetrieb 26.3 des Fahrzeuges, d. h. ohne Anhänger 26.1, entschieden. Kann das Auswerteergebnis weder dem Zustand mit oder ohne Anhänger 26.3, 26.2 zugeordnet werden, so wird auf einen unbekannten Zustand entschieden 26.1, wobei das Erkennungsverfahren dann wiederholt wird, bei das Auswerteergebnis einem der Zustände, nämlich mit oder ohne Anhänger 26.3, 26.2 zugeordnet werden kann.

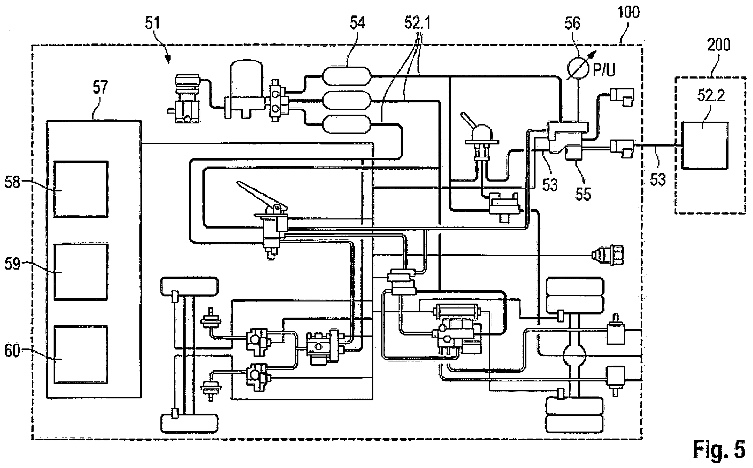

Fig. 5 zeigt eine schematische Darstellung einer möglichen Ausgestaltungsform eines erfindungsgemäßen elektro-pneumatischen Systems, insbesondere einer Bremsanlage zur Abbremsung eines Fahrzeugs 100. Die Fig. 5 zeigt in vereinfachter Darstellung ein elektropneumatisch oder pneumatisch System zum Erkennen von einem Betriebszustand des Fahrzeuges 100, das insbesondere dazu ausgebildet ist, die verschiedenen Ausgestaltungsformen des Erkennungsverfahrens auszuführen. Eine Ausgestaltungsform der Erfindung umfasst ein pneumatisches Bremsdrucksystem 52.1 mit einer Steuerverbindung 53, wobei die Steuerverbindung 53 ausgebildet ist, das pneumatische Bremsdrucksystem 52.1 mit einem weiteren pneumatischen Bremsdrucksystem 52.2 eines Anhängers 200 (nur schematisch dargestellt) zu verbinden. Über einen Druckspeicher 54 wird die Steuerverbindung mit Druck beaufschlagt, vorzugsweise bis zu einem Startdruck von 6 bar, so dass ein Sollwertsprung ausgeführt werden kann. An der Steuerverbindung 53 ist zudem ein Entlüftungsventil 55 zum Öffnen der Steuerverbindung 53 zur Umgebung vorgesehen. Nach dem Öffnen der Steuerverbindung zur Umgebung, stellt sich - nach einer gewissen Zeit - ein Druckausgleich zwischen der Umgebung und der geöffneten Steuerverbindung ein, wobei die zeitliche Änderung des Druckes mittels eines Drucksensors 56, beispielsweise in Form eines Druck-Spannungssensors, erfasst wird. Darüber hinaus ist eine Steuereinheit 57 vorgesehen, die aus dem erfassten zeitlichen Druckverlauf und einem Referenzdruckverlauf bzw. aus den entsprechenden Entlüftungszeiten ein Auswerteergebnis ermittelt. Anschließend wird das Auswerteergebnis einem Betriebszustand des Fahrzeuges 100 zugeordnet, insbesondere einem Betriebszustand des Fahrzeuges 100 mit oder ohne Anhänger 200. Die Steuereinheit 57 umfasst hierbei insbesondere ein Auswertemodul 58, einen Zeitmesser 59 und ein Vergleichsmodul 60. In einer möglichen Ausgestaltungsform sind das Auswertemodul 58, der Zeitmesser 59 und das Vergleichsmodul 60 als Softwarebestandteile eines Bremsenmanagementsystems ausgebildet.

Fig. 6 zeigt ein schematisches Ablaufdiagramm für ein Korrektur-/Anpassungsverfahren für den Referenzwert, insbesondere die Referenzentlüftungszeit, gemäß einer möglichen Ausgestaltungsform.

Experimentelle Messungen der Entlüftungszeiten der Steuerverbindung eines Fahrzeuges haben gezeigt, dass sich diese - bei einem konstanten (bekannten) Volumen - durch eine lineare Funktion beschreiben lassen (siehe auch Formel 1.1 oben). Jedoch kann es bei unbekannten Fahrzeugen, insbesondere mit unbekannten Volumina, Abweichungen hiervon geben, da das Volumen verschieden sein kann. In diesem Fall kann eine Korrektur der Referenzfunktion/des Referenzwertes notwendig sein. Eine mögliche Ausgestaltung gemäß einem Anpassungs-/Korrekturverfahren ist in der Fig. 6 dargestellt, wobei in vereinfachter Weise nur der Referenzwert für die Entlüftungszeit angepasst/korrigiert wird, derart, dass dieser entweder verkleinert oder vergrößert wird.

Für die Anpassung/Korrektur des Referenzwertes sind bevorzugt zwei Fehlerzähler vorgesehen. Ein erster, temporärer Fehlerzähler (nicht dargestellt), der jedes Mal beim Start des Fahrzeuges (zurück) auf null gesetzt und eine zweiter Fehlerzähler. Mit dem ersten temporären Fehlerzähler sollen die Auswirkungen durch Fehler, die aufgrund von z. B. nicht korrekt angekoppelten Kupplungsköpfen entstehen, erkannt werden. Ist eine Erkennung des Betriebszustandes gemäß dem Erkennungsverfahren nicht möglich, d. h. der Betriebsstatus des Fahrzeuges ist auf einen unbekannten Betriebszustand/Status gesetzt worden, so wird der erste, temporäre Fehlerzähler jeweils nach einem Umlauf des Erkennungsverfahren um +1 erhöht (vgl. auch Beschreibung zu Fig. 2 und 4 oben).

Ist eine maximal zulässige Anzahl von Fehlermessungen (Fehlergrenzwert) mit dem ersten, temporären Fehlerzähler erreicht, so wird eine Anpassung des Referenzwertes gemäß Fig. 6 notwendig.

Bei dem in der Fig. 6 gezeigten Anpassungsverfahren des Referenzwertes wird, nach dem Erreichen des Fehlergrenzwerts, zunächst das Verfahren aufgerufen bzw. gestartet 61 und der zweite Fehlerzähler um +1 erhöht 61.1. Der zweite Fehlerzähler wird jedoch nach einem Abschalten des Fahrzeuges nicht auf null zurückgesetzt. Auch beim zweiten Fehlerzähler ist ein Fehlergrenzwert vorgesehen, der nicht überschritten werden darf. Es wird deshalb zunächst der aktuelle Fehlergrenzwert des zweiten Fehlerzählers überprüft 62. Unterhalb eines vorgegebenen Grenzwertes wird mit Anpassungsverfahren für den Referenzwert fortgefahren, oberhalb wird es beendet oder gestoppt 67. In letzten Fall ist eine externe Diagnose des Erkennungsverfahrens, beispielsweise in einer Werkstatt, notwendig.

Solange der zweite Fehlerzähler den Grenzwert noch nicht überschritten hat, kann der Referenzwert korrigiert werden. Hierfür ist zunächst eine Bewertung der Abweichung notwendig 63, derart, ob die Referenzentlüftungszeit zu groß 63.1 oder zu klein ist 63.2. Im unbekannten Betriebszustand des Fahrzeuges können grundsätzlich zwei Konstellationen auftreten, nämlich einmal, dass die Referenzentlüftungszeit zu groß ist 63.1, d. h. es wird von einem größeren Volumen ausgegangen als es tatsächlich im Fahrzeug vorliegt, oder dass die Referenzentlüftungszeit zu klein ist 63.2, was einem zu kleinen Volumen entspricht.

Für die Bewertung der Abweichung wird vorliegend eine Differenz gebildet. Bei einer zu großen Referenzentlüftungszeit ist dann der Differenzwert aus gemessener Entlüftungszeit und Referenzentlüftungszeit negativ und kleiner als $\Delta t = -50$ ms. Dies bedeutet, dass die verbaute Leitungslänge im Fahrzeug, insbesondere das zu entlüftende Volumen, kleiner ist als angenommen. Eine Anpassung erfolgt also durch eine Verkleinerung/Verringerung der Referenzentlüftungszeit. Bevor der Referenzwert jedoch tatsächlich verkleinert wird, muss zunächst sichergestellt oder verifiziert werden, ob die ermittelte Entlüftungszeit auch tatsächlich zum Solobetrieb gehört. Für eine Verifizierung des Solobetriebes können beispielsweise zusätzliche Fahrzeugmerkmale, wie die Masse des Fahrzeuges und die Belegung einer Stromversorgung, insbesondere eines Strompins, abgefragt/verwendet werden. Ein Anhängerbetrieb kann hierbei immer dann ausgeschlossen werden, wenn die ermittelte Fahrzeugmasse im Wesentlichen dem Leergewicht des Fahrzeuges entspricht. Das Anpassungsverfahren prüft 64A deshalb zunächst, ob die Masse des Fahrzeuges mit dem Leergewicht des Fahrzeuges übereinstimmt. Zusätzlich wird auch die Stromversorgung zum Anhänger abgefragt/geprüft 65A. Nur dann, wenn beide Kriterien für einen Solobetrieb und gegen einen Anhängerbetrieb sprechen, wird der Referenzwert verkleinert. Hierbei wird der Referenzwert entweder mit Hilfe der Formel 1.2 durch adaptives Anpassen verkleinert und/oder durch ein Auswerten eines Fehlerspeichers. Bei einer Fehlerkennung wird bevorzugt die "falsche" Entlüftungszeit im Fehlerspeicher gespeichert. Tritt der gleiche Fehler dann regelmäßig auf, z. B weil die Referenzentlüftungszeit zu klein ist, kann die Referenzentlüftungszeit über einen Mittelwertbildung mit der der gespeicherten "falsche" Entlüftungszeit korrigiert werden.

Wird anschließend das erfindungsgemäße Erkennungsverfahren, so wie es in den Fig. 2 oder 4 beschrieben ist, erneut ausgeführt und führt dies wiederum zu einer Fehlermeldung bzw. zu einem unbekannten Betriebszustand des Fahrzeugs, so kann das Korrekturverfahren für den Referenzwert wiederholt werden, wobei der zweite Fehlerzähler um +1 wiederum erhöht wird 61.1.

Bei der anderen Konstellation, bei welcher der Referenzwert für die Entlüftungszeit zu klein ist, insbesondere wenn der Differenzwert aus gemessener Entlüftungszeit und Referenzentlüftungszeit im Bereich zwischen dem Anhänger- und dem Solobetrieb liegt, genauer zwischen t = +50 ms und +200 ms, wird der Referenzwert vergrößert oder verkleinert. In diesem Fall ist entweder ein Anhänger vorhanden (Zweig 64B/65B) oder kein Anhänger im Zweig 64C/65C. Im Fall eines vorhandenen Anhängers (64B/65B) wird die Referenz verkleinert um die Differenzzeit über den kritischen Wert von größer 200 ms zu heben. Falls kein Anhänger vorhanden ist wird die Referenzzeit erhöht (Zweig 64C/65C) um die Differenzzeit an 0 ms anzunähern.

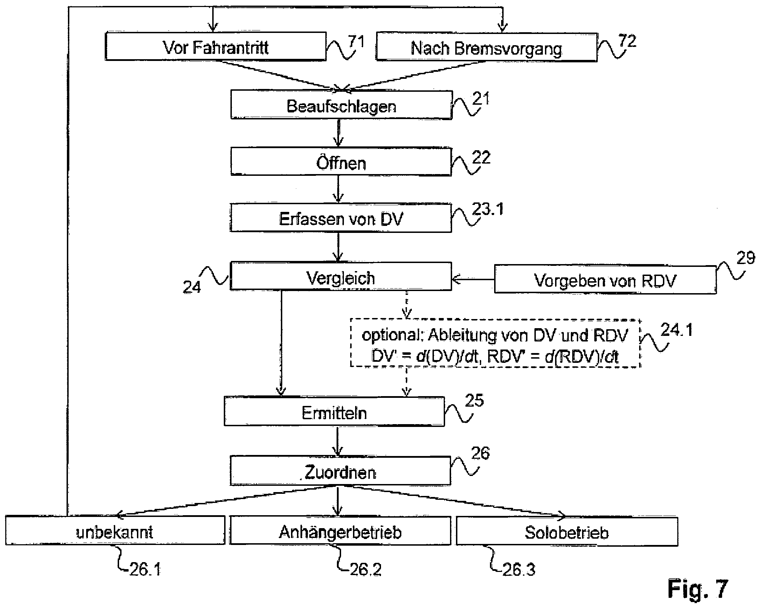

Fig. 7 zeigt ein schematisches Ablaufdiagramm gemäß einer weiteren Ausgestaltungsform des Verfahrens zum Erkennen eines Betriebszustandes eines Fahrzeuges. Hierbei kann das Fahrzeug insgesamt drei Betriebszuständen zugeordnet werden, insbesondere dem Zustand des Fahrzeuges mit Anhänger 26.2, ohne Anhänger 26.3 oder einen weiteren dritten Zustand, nämlich einen unbekannten Zustand 26.1, wenn der aktuelle oder ermittelte Zustand weder dem Betriebszustand mit oder ohne Anhänger 26.3, 26.2 zugeordnet werden kann.

Das in der Fig. 7. schematisch dargestellte Verfahren kann entweder vor Fahrtantritt 71 (vgl. hierzu die in der Fig. 2 dargestellte Ausführungsform sowie die dazugehörige Beschreibung) und/oder nach einem Bremsvorgang 72 (vgl. hierzu die in der Fig. 4 dargestellte Ausführungsform sowie die dazugehörige Beschreibung) ausgeführt werden.

Anschließend wird die Steuerverbindung mit Druck oder Druckluft, beispielsweise aus einem Druckluftspeicher, beaufschlagt 21 bis ein bestimmter Startdruck in der Steuerverbindung erreicht ist. Nach dem Erreichen des bestimmten Startdruckes in der Steuerverbindung wird über ein Steuerventil die Steuerverbindung zur Umgebung geöffnet 22, so dass ein Druckausgleich zwischen Steuerverbindung und Umgebung erfolgt. Während des Druckausgleiches wird der zeitliche Druckverlauf DV in der Steuerverbindung erfasst, insbesondere das Druckverhalten in der Steuerleitung. Weiterhin wird ein Referenzdruckverlauf RDV vorgegeben 29, mit welchem der erfasste zeitliche Druckverlauf DV verglichen 24 wird.

Basierend auf dem Vergleichen 24 des erfassten zeitlichen Druckverlaufs DV mit dem Referenzdruckverlauf RDV wird dann ein Auswerteergebnis ermittelt 25, wobei das Auswerteergebnis insbesondere ein Maß für eine Abweichung des erfassten Druckverlaufes vom Referenzdruckverlauf ist. Alternativ oder ergänzend kann es vorgesehen sein, dass nach dem Erfassen 23.1 des zeitlichen Druckverlaufes DV 23.1 eine zeitliche Ableitung DV' ($d$(DV)/$d$t) des zeitlichen Druckverlaufes DV und eine zeitliche Ableitung des Referenzdruckverlaufes RDV' ($d$(RDV)/$d$t) ermittelt wird und anschließend - zur Ermittlung eines Auswerteergebnisses - verglichen werden. Hierbei ist das Auswerteergebnis dann ein Maß für eine Abweichung zwischen DV' ($d$(DV)/$d$t) und RDV' ($d$(RDV)/$d$t).

Anschließend wird das Auswerteergebnis dem ersten, zweiten oder dritten Betriebszustand des Fahrzeuges, nämlich dem Zustand des Fahrzeuges mit Anhänger 26.2, ohne Anhänger 26.3 oder dem unbekannten Zustand 26.1, zugeordnet, wobei das Verfahren wiederholt wird, wenn eine Zuordnung zum unbekannten Betriebszustand 26.1 erfolgt ist.

Bezugszeichenliste (Bestandteil der Beschreibung)

| | |
|---|---|
| 1 | DV über Feststellventil mit Anhänger |
| 2 | DV über Feststellventil ohne Anhänger |
| 3 | DV nach Sollwertsprung mit Anhänger |
| 4 | DV nach Sollwertsprung ohne Anhänger |
| 20.1 | Start |
| 20.2 | CAN-Prüfung |
| 20.3 | Stillstand des Fahrzeuges? |
| 20.4 | Feststellbremse aktiv? |
| 20.5 | Feststellbremse gelöst? |

| | |
|---|---|
| 20.6 | Erkennungsverfahren zugelassen? |
| 20.7 | Bewertung Bremswertgeber |
| 20.8 | Beobachtung Bremswertgeber |
| 21 | Beaufschlagen der Steuerverbindung mit Druck |
| 21.1 | Abfrage Startdruck |
| 22 | Öffnen der Steuerverbindung |
| 23.1 | Erfassen des DV |
| 23.2 | Start Zeitmessung |
| 23.3 | Stopp Zeitmessung |
| 23.4 | Abfrage Druckgrenzwert |
| 23.5 | Entlüftungszeit |
| 23.6 | Referenzentlüftungszeit |
| 23.7 | Druckabfall |
| 23.8 | Stabiles Druckniveau |
| 24 | Vergleichen DV und RVD |
| 24.1 | Ableiten von DV und RVD |
| 25 | Ermitteln |
| 25.1 | Auswerteergebnis |
| 26 | Zuordnen |
| 26.2 | Erster Betriebszustand, insbesondere Anhängerbetrieb |
| 26.3 | Zweiter Betriebszustand, insbesondere Solobetrieb |
| 26.1 | Dritter Betriebszustand, insbesondere unbekannter Zustand |
| 27 | Stopp |
| 28 | Regelbetrieb |
| 29 | Vorgeben von RDV |
| 30 | (Druck-)Sollwertsprung |
| 51 | Elektro-pneumatisches System |
| 52.1 | Pneumatisches Bremsdrucksystem |
| 52.2 | Weiteres pneumatisches Bremsdrucksystem |
| 53 | Steuerverbindung |
| 54 | Druckspeicher |
| 55 | Entlüftungsventil |
| 56 | Drucksensor |
| 57 | Steuereinheit |
| 58 | Auswertemodul |
| 59 | Zeitmesser |
| 60 | Vergleichsmodul |
| 61 | Start Anpassungs-/Korrekturverfahren |
| 61.1 | Zweiter Fehlerzähler +1 |
| 62 | Überprüfung zweiter Fehlergrenzwert |
| 63 | Bewertung der Abweichung |
| 63.1 | Abweichung zu groß |
| 63.2 | Abweichung zu klein |
| 64A, 64B, 64C | Abfrage Leergewicht des Fahrzeuges |
| 65A, 65B, 65,C | Abfrage Stromversorgung für Anhänger |
| 66 | Korrektur des Referenzgewichtes |
| 71 | Vor Fahrantritt des Fahrzeuges |
| 72 | Nach Bremsung des Fahrzeuges |
| 100 | Fahrzeug |
| 200 | Anhänger |
| BWG | Bremswertgebers |
| DV | Druckverlauf |
| RDV | Referenzdruckverlauf |
| DV’ | Zeitliche Ableitung des Druckverlaufes ($d$(DV)/$d$t) |
| RDV’ | Zeitliche Ableitung des Referenzdruckverlauf ($d$(RDV)/$d$t) |

## Patentansprüche

1. Verfahren zum Erkennen von einem Betriebszustand eines Fahrzeuges (100), wobei der Betriebszustand ausgewählt ist aus mindestens einem ersten oder zweiten Betriebszustand (26.3, 26.2), insbesondere aus einem Zustand des Fahrzeuges (100) mit oder ohne Anhänger (200), und das Fahrzeug (100) aufweisend ein pneumatisches Bremssystem (52.1) und eine pneumatische Steuerverbindung (53), die ausgebildet ist, um das pneumatische Bremssystem (52.1) mit einem weiteren pneumatischem Bremssystem (52.2) eines Anhängers (200) zu verbinden, **dadurch gekennzeichnet, dass** das Verfahren die folgenden Schritte umfasst:

   - Beaufschlagen (21) der Steuerverbindung (53) mit Druck bis ein Startdruck (21.1) in der Steuerverbindung (53) eingestellt ist;
   - Öffnen (22) der Steuerverbindung (53), so dass ein Druckausgleich zwischen Steuerverbindung (53) und einer Umgebung erfolgt;
   - Erfassen (23.1) eines zeitlichen Druckverlaufes (DV) während des Druckausgleiches;
   - Vergleichen (24) des zeitlichen Druckverlaufes (DV) mit einem Referenzdruckverlauf (RDF);
   - Ermitteln (25) eines Auswerteergebnisses (25.1) basierend auf dem Vergleichen (24) von zeitlichen Druckverlauf (DV) und Referenzdruckverlauf (RDF); und
   - Zuordnen (26) des Auswerteergebnisses (25.1) zu dem ersten oder zweiten Betriebszustand (26.3, 26.2) des Fahrzeuges (100).

2. Verfahren nach Anspruch 1, **dadurch gekennzeichnet, dass** das Öffnen (22) der Steuerverbindung (53) mittels eines Entlüftungsventiles (55) ausgeführt wird.

3. Verfahren nach Anspruch 1 oder 2, **dadurch gekennzeichnet, dass** der zeitliche Druckverlauf (DV) ein Druckabfall (23.7) in der Steuerverbindung (53) ist.

4. Verfahren nach einem der vorangehenden Ansprüche, **dadurch gekennzeichnet, dass** beim Erfassen (23.1) des zeitlichen Druckverlaufes (DV) zusätzlich die folgenden Schritte ausgeführt werden:

   - Starten (23.2) eines Zeitmessers (59) beim Öffnen (22) der Steuerverbindung (53);
   - Stoppen (23.3) des Zeitmessers (59), wenn in der Steuerverbindung (53) ein Druckgrenzwert (23.4) erreicht wird; und
   - Ermitteln einer Entlüftungszeit (23.5) der Steuerverbindung (53).

5. Verfahren nach Anspruch 4, **dadurch gekennzeichnet, dass** dem zeitlichen Druckverlauf (DV) die Entlüftungszeit (23.5) der Steuerverbindung (53) und dem Referenzdruckverlauf (RDF) eine Referenzentlüftungszeit (23.6) zugeordnet wird.

6. Verfahren nach Anspruch 5, **dadurch gekennzeichnet, dass** beim Vergleichen (24) aus Entlüftungszeit (23.5) und Referenzentlüftungszeit (23.6) eine Differenz gebildet wird.

7. Verfahren nach einem der vorangehenden Ansprüche, **dadurch gekennzeichnet, dass** das Verfahren nach dem Erfassen (23.1) des zeitlichen Druckverlaufes (DV) zusätzlich die folgenden Schritte umfasst:

   - Ermitteln einer zeitlichen Ableitung (DV’) des zeitlichen Druckverlaufes (DV); und
   - Vergleichen der zeitlichen Ableitung (DV’) des zeitlichen Druckverlaufes (DV) mit einer zeitlichen Ableitung des Referenzdruckverlaufes (RDV’).

8. Verfahren nach einem der vorangehenden Ansprüche, **dadurch gekennzeichnet, dass** der Startdruck (21.1) in der Steuerverbindung (53) bevorzugt einen Wert von 6 bis 5 bar aufweist.

9. Verfahren nach einem der vorangehenden Ansprüche, **dadurch gekennzeichnet, dass** das Verfahren vor Fahrtantritt (71) und/oder nach einem Bremsvorgang (72) des Fahrzeuges (100) ausgeführt wird.

10. Verfahren nach einem der vorangehenden Ansprüche, **dadurch gekennzeichnet, dass** die Steuerverbindung (53) vor dem Beaufschlagen (21) der Steuerverbindung (53) mit Druck zumindest teilweise entleert ist.

11. Verfahren nach einem der vorangehenden Ansprüche, **dadurch gekennzeichnet, dass** das Öffnen (22) der Steuerverbindung (53) erst nach einem Erreichen eines stabilen Druckniveaus (23.8) in der Steuerverbindung (53) ausgeführt wird.

**12.** Verfahren nach einem der vorangehenden Ansprüche, wobei das Auswerteergebnis (25.1) einem dritten Betriebszustand (26.1) des Fahrzeuges (100) zugeordnet wird, wenn der aktuelle Betriebszustand weder dem ersten oder zweiten Betriebszustand (26.3, 26.2) des Fahrzeuges (100) zugeordnet werden kann.

**13.** Verfahren nach Anspruch 12, **dadurch gekennzeichnet, dass** nach dem Zuordnen (25) des dritten Betriebszustandes (26.1), das Verfahren wiederholt wird, bis das Auswerteergebnis (25.1) dem ersten oder zweiten Betriebszustand (26.3, 26.2) zugeordnet wird.

**14.** Elektro-pneumatisches System (51) zum Erkennen von einem Betriebszustand (26.3, 26.2) eines Fahrzeuges (100), ausgebildet ein Verfahren nach einem der Ansprüche 1 bis 13 auszuführen, aufweisend:

- ein pneumatisches Bremsdrucksystem (52.1),
- eine Steuerverbindung (53), die ausgebildet ist, das pneumatische Bremsdrucksystem (52.1) mit einem weiteren pneumatischen Bremsdrucksystem (52.1) eines Anhängers (200) zu verbinden,
- einen Druckspeicher (54) zur Beaufschlagung (21) der Steuerverbindung (53) mit Druck,
- ein Entlüftungsventil (55) zum Öffnen (22) der Steuerverbindung (53) zur Umgebung,
- einen Drucksensor (56) zum Erfassen (23.1) eines zeitlichen Druckverlaufes (DV) in der Steuerverbindung (53),

**dadurch gekennzeichnet, dass** das System

- eine Steuereinheit (55) aufweist, die ausgebildet ist, aus dem zeitlichen Druckverlauf (DV) und einem Referenzdruckverlauf (RDV) ein Auswerteergebnis (25.1) zu ermitteln (25) und das Auswerteergebnis (25.1) einem Betriebszustand (26.3, 26.2) des Fahrzeuges (100) zu zuordnen, wobei der Betriebszustand (26.3, 26.2) ausgewählt ist aus mindestens einem ersten und einem zweiten Betriebszustand, insbesondere aus einem Zustand des Fahrzeuges (100) mit oder ohne Anhänger (200).

**15.** Fahrzeug (100) enthaltend ein elektro-pneumatisches System (51) zum Erkennen von einem Betriebszustand (26.1, 26.2, 26.3) eines Fahrzeuges (100) nach Anspruch 14, wobei das System 51 ausgebildet ist ein Verfahren nach einem der Ansprüche 1 bis 13 auszuführen.

## Claims

**1.** Method for detecting an operating state of a vehicle (100), wherein the operating state is selected from at least a first or a second operating state (26.3, 26.2), in particular from a state of the vehicle (100) with or without a trailer (200), and the vehicle (100) comprising a pneumatic brake system (52.1) and a pneumatic control connection (53), which is designed for connecting the pneumatic brake system (52.1) to a further pneumatic brake system (52.2) of a trailer (200), **characterized in that** the method includes the following steps:

- applying (21) pressure to the control connection (53) until a starting pressure (21.1) in the control connection (53) is set;
- opening (22) the control connection (53) such that a pressure between the control connection (53) and an environment is equalized;
- detecting (23.1) a temporal pressure pattern (DV) during the pressure equalization;
- comparing (24) the temporal pressure pattern (DV) to a reference pressure pattern (RDF);
- determining (25) an evaluation result (25.1) based on the comparison (24) of the temporal pressure pattern (DV) and the reference pressure pattern (RDF); and
- assigning (26) the evaluation result (25.1) to the first or the second operating state (26.3, 26.2) of the vehicle (100).

**2.** Method according to Claim 1, **characterized in that** the opening (22) of the control connection (53) is carried out by means of a vent valve (55).

**3.** Method according to Claim 1 or 2, **characterized in that** the temporal pressure pattern (DV) is a pressure drop (23.7) in the control connection (53).

**4.** Method according to one of the preceding claims, **characterized in that**, during the detection (23.1) of the temporal pressure pattern (DV), the following steps are additionally carried out:

- starting (23.2) a time-measuring instrument (59) upon opening (22) the control connection (53);
- stopping (23.3) the time-measuring instrument (59) when a pressure limit value (23.4) has been reached in the control connection (53); and
- determining a vent time (23.5) of the control connection (53).

**5.** Method according to Claim 4, **characterized in that** the vent time (23.5) of the control connection (53) is assigned to the temporal pressure pattern (DV) and a reference vent time (23.6) is assigned to the reference pressure pattern (RDF).

**6.** Method according to Claim 5, **characterized in that** a difference is formed in the comparison (24) of the vent time (23.5) and the reference vent time (23.6).

**7.** Method according to one of the preceding claims, **characterized in that**, during the method after the detection (23.1) of the temporal pressure pattern (DV) additionally includes the following steps:

- determining a derivative with respect to time (DV') of the temporal pressure pattern (DV); and
- comparing the derivative with respect to time (DV') of the temporal pressure pattern (DV) with a derivative with respect to time of the reference pressure pattern (RDV').

**8.** Method according to one of the preceding claims, **characterized in that** the starting pressure (21.1) in the control line (53) preferably has a value of 6 to 5 bar.

**9.** Method according to one of the preceding claims, **characterized in that** the method is carried out before the commencement of driving (71) and/or after a braking procedure (72) of the vehicle (100).

**10.** Method according to one of the preceding claims, **characterized in that** the control connection (53) is at least partially emptied before pressure is applied (21) to the control connection (53).

**11.** Method according to one of the preceding claims, **characterized in that** the opening (22) of the control connection (53) is not carried out until a stable pressure level (23.8) in the control connection (53) has been reached.

**12.** Method according to one of the preceding claims, wherein the evaluation result (25.1) is assigned to a third operating state (26.1) of the vehicle (100) if the current operating state cannot be assigned either to the first or the second operating state (26.3, 26.2) of the vehicle (100).

**13.** Method according to Claim 12, **characterized in that**, after the assignment (25) of the third operating state (26.1), the method is repeated until the evaluation result (25.1) is assigned to the first or the second operating state (26.3, 26.2).

**14.** Electro-pneumatic system (51) for detecting an operating state (26.3, 26.2) of a vehicle (100), designed for carrying out a method according to one of Claims 1 to 13, comprising:

- a pneumatic braking-pressure system (52.1),
- a control connection (53), which is designed for connecting the pneumatic braking-pressure system (52.1) to a further pneumatic braking-pressure system (52.1) of a trailer (200),
- a pressure accumulator (54) for applying (21) pressure to the control connection (53),
- a vent valve (55) for opening (22) the control connection (53) to the environment,
- a pressure sensor (56) for detecting (23.1) a temporal pressure pattern (DV) in the control connection (53),
**characterized in that** the system
- comprises a control unit (55), which is designed for determining (25) an evaluation result (25.1) from the temporal pressure pattern (DV) and a reference pressure pattern (RDV) and assigning the evaluation result (25.1) to an operating state (26.3, 26.2) of the vehicle (100), wherein the operating state (26.3, 26.2) is selected from at least a first and a second operating state, in particular from a state of the vehicle (100) with or without a trailer (200).

**15.** Vehicle (100) containing an electro-pneumatic system (51) for detecting an operating state (26.1, 26.2, 26.3) of a vehicle (100) according to Claim 14, wherein the system 51 is designed for carrying out a method according to one of Claims 1 to 13.

## Revendications

1. Procédé de détection d'un état de fonctionnement d'un véhicule (100), dans lequel l'état de fonctionnement est sélectionné parmi au moins un premier ou un deuxième état de fonctionnement (26.3, 26.2), en particulier parmi un état du véhicule (100) avec ou sans remorque (200), et le véhicule (100) présentant un système de freinage pneumatique (52.1) et une liaison de commande pneumatique (53), qui est configurée en vue de relier le système de freinage pneumatique (52.1) à un autre système de freinage pneumatique (52.2) d'une remorque (200), **caractérisé en ce que** le procédé comprend les opérations suivantes:

   - alimenter (21) la liaison de commande (53) en pression jusqu'à ce qu'une pression de démarrage (21.1) soit réglée dans la liaison de commande (53);
   - ouvrir (22) la liaison de commande (53), de telle manière qu'il en résulte un équilibre de pression entre la liaison de commande (53) et un environnement;
   - détecter (23.1) une évolution temporelle de la pression (DV) pendant l'équilibre de pression;
   - comparer (24) l'évolution temporelle de la pression (DV) avec une évolution de pression de référence (RDF);
   - déterminer (25) un résultat d'évaluation (25.1) en se basant sur la comparaison (24) de l'évolution temporelle de la pression (DV) et de l'évolution de pression de référence (RDF); et
   - associer (26) le résultat d'évaluation (25.1) au premier ou au deuxième état de fonctionnement (26.3, 26.2) du véhicule (100).

2. Procédé selon la revendication 1, **caractérisé en ce que** l'on effectue l'ouverture (22) de la liaison de commande (53) au moyen d'une soupape d'aération (55).

3. Procédé selon la revendication 1 ou 2, **caractérisé en ce que** l'évolution temporelle de la pression (DV) est une baisse de pression (23.7) dans la liaison de commande (53).

4. Procédé selon l'une quelconque des revendications précédentes, **caractérisé en ce que** lors de la détection (23.1) de l'évolution temporelle de la pression (DV) on effectue en outre les opérations suivantes:

   - démarrer (23.2) un chronomètre (59) lors de l'ouverture (22) de la liaison de commande (53);
   - arrêter (23.3) le chronomètre (59), lorsqu'une valeur limite de pression (23.4) est atteinte dans la liaison de commande (53); et
   - déterminer le temps d'aération (23.5) de la liaison de commande (53).

5. Procédé selon la revendication 4, **caractérisé en ce qu'**un temps d'aération (23.5) de la liaison de commande (53) est associé à l'évolution temporelle de la pression (DV) et un temps d'aération de référence (23.6) est associé à l'évolution de pression de référence (RDF).

6. Procédé selon la revendication 5, **caractérisé en ce que** l'on forme une différence lors de la comparaison (24) du temps d'aération (23.5) et du temps d'aération de référence (23.6).

7. Procédé selon l'une quelconque des revendications précédentes, **caractérisé en ce qu'**après la détection (23.1) de l'évolution temporelle de la pression (DV) le procédé comprend en outre les opérations suivantes:

   - déterminer une dérivée temporelle (DV') de l'évolution temporelle de la pression (DV); et
   - comparer la dérivée temporelle (DV') de l'évolution temporelle de la pression (DV) à une dérivée temporelle de l'évolution de pression de référence (RDV').

8. Procédé selon l'une quelconque des revendications précédentes, **caractérisé en ce que** la pression de démarrage (21.1) dans la liaison de commande (53) présente de préférence une valeur de 6 à 5 bars.

9. Procédé selon l'une quelconque des revendications précédentes, **caractérisé en ce que** l'on exécute le procédé avant le départ (71) et/ou après une opération de freinage (72) du véhicule (100).

10. Procédé selon l'une quelconque des revendications précédentes, **caractérisé en ce que** la liaison de commande (53) est vidée au moins partiellement avant l'alimentation (21) de la liaison de commande (53) en pression.

11. Procédé selon l'une quelconque des revendications précédentes, **caractérisé en ce que** l'ouverture (22) de la liaison de commande (53) n'est effectuée qu'après avoir atteint un niveau de pression stable (23.8) dans la liaison de commande (53).

12. Procédé selon l'une quelconque des revendications précédentes, **caractérisé en ce que** le résultat d'évaluation (25.1) est associé à un troisième état de fonctionnement (26.1) du véhicule (100), lorsque l'état de fonctionnement actuel ne peut être associé ni au premier ni au deuxième état de fonctionnement (26.3, 26.2) du véhicule (100).

13. Procédé selon la revendication 12, **caractérisé en ce qu'**après l'association (25) du troisième état de fonctionnement (26.1), on répète le procédé jusqu'à ce que le résultat d'évaluation (25.1) soit associé au premier ou au deuxième état de fonctionnement (26.3, 26.2).

14. Système électropneumatique (51) pour détecter un état de fonctionnement (26.3, 26.2) d'un véhicule (100), configuré pour exécuter un procédé selon l'une quelconque des revendications 1 à 13, présentant:

- un système de pression de freinage pneumatique (52.1),
- une liaison de commande (53), qui est conçue de façon à relier le système de pression de freinage pneumatique (52.1) à un autre système de pression de freinage pneumatique (52.1) d'une remorque (200),
- un réservoir sous pression (54) pour alimenter (21) la liaison de commande (53) en pression,
- une soupape d'aération (55) pour ouvrir la liaison de commande (53) vers l'environnement,
- un capteur de pression (56) pour détecter (23.1) une évolution temporelle de la pression (DV) dans la liaison de commande (53),

**caractérisé en ce que** le système

- présente une unité de commande (55), qui est conçue de façon à déterminer (25) un résultat d'évaluation (25.1) à partir de l'évolution temporelle de la pression (DV) et d'une évolution de pression de référence (RDV) et d'associer le résultat d'évaluation (25.1) à un état de fonctionnement (26.3, 26.2) du véhicule (100), dans lequel l'état de fonctionnement (26.3, 26.2) est sélectionné parmi au moins un premier et un deuxième états de fonctionnement, en particulier parmi un état du véhicule (100) avec ou sans remorque (200).

15. Véhicule (100) comportant un système électropneumatique (51) pour détecter un état de fonctionnement (26.1, 26.2, 26.3) d'un véhicule (100) selon la revendication 14, dans lequel le système (51) est conçu en vue d'exécuter un procédé selon l'une quelconque des revendications 1 à 13.

Druck [bar]
DV
DV
7
6
5
4
3
2
1
0
0
250
500
750
1000
4
3
2
1
Zeit [ms]

Fig. 1

Start
20.1
CAN?
20.2
Nein
Still-
stand?
20.3
Nein
Ja
FBA
aktiv?
20.4
Nein
Ja
20.5
Gelöst?
Ja
20.6
Erlaubt?
Nein
Status
=letzter Status
Ja
Soll-
wertsprung
30
21
Start-
druck?
21.1
Nein
Ja
Öffnen
22
23.1
23.2
Erfassen
Start Timer
23.3
23.4
Druck-
grenzwert?
Nein
Ja
DV
29
RDV
Referenz
Stop
Timer
23.5
23.6
24
Vergleichen
25
Fehler
25.1
Δt = 0±50ms
Δt > 200ms
26
ohne
Anhänger
mit
Anhänger
26.1
26.2
26.3
unbekannt
Stop
27
Regel-
betrieb
28
Fig. 2

Druck [bar]
Zeit [ms]
DV
30
21
23.8
22
23.2
23.1
23.7
23.3
23.5
0
1
2
3
4
5
6
7
8
500
1000
1500
2000
2500


Fig. 3

Start
20.1
CAN?
Nein
Bewertung Bremsdruck
p < 3bar
Stillstand?
Nein
Aufruf: Erkennung BWG
20.2
20.7
Ja
20.3
Ja
Nein
BWG = const?
BWG=0?
Ja
Ja
Nein
20.8
weiter wie in Fig. 2
Sollwert-sprung?
30
Ja
Nein
Ja
p > 3bar
P_ASTV = 0,5bar?
22
Ja
Öffnen
Erfassen
Start Timer
23.1
23.2
28
DV
23.4
Nein
Regel-betrieb
Stop Timer
Ja
Druck-grenzwert
23.5
23.3
23.6
24
RDV
Vergleichen
Fehler
25
25.1
25
25
26
Stop
Stop
Δt = 0±25ms
Δt > 100ms
25.1
26.3
27
27
26
26
26.1
ohne Anhänger
mit Anhänger
unbekannt
26.2
Fig. 4

200
52.2
53
100
P/U
56
55
53
52.1
54
51
57
58
59
60

Fig. 5

61
61.1
62
67
Start
Fehler +1
Fehler gesamt?
Stop
64A
63
Masse = Leergewicht?
Ja
Referenz >> aktuelle Zeit
63.1
Ja
65A
Nein
63.2
64B
64C
Strompin belegt?
Masse > zulässiges Gewicht?
Nein
Masse = Leergewicht?
Ja
65B
Ja
65C
Nein
Ja
Nein
Nein
Strompin belegt?
Strompin belegt?
66
Ja
66
Nein
66
Korrektur Referenzwert verkleinern
Korrektur Referenzwert verkleinern
Korrektur Referenzwert vergrößern
68
Abbruch

Fig. 6

72
Nach Bremsvorgang
71
Vor Fahrantritt
21
Beaufschlagen
22
Öffnen
23.1
Erfassen von DV
29
Vorgeben von RDV
24
Vergleich
24.1
optional: Ableitung von DV und RDV
DV' = d(DV)/dt, RDV' = d(RDV)/dt
25
Ermitteln
26
Zuordnen
unbekannt
26.1
Anhängerbetrieb
26.2
Solobetrieb
26.3

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4200302 C2
- DE 19744066 B4
- DE 19955798 A1
- DE 3302236 A1
- DE 4039957 A1